# EUROPÄISCHE PATENTSCHRIFT

(11) **EP 3 603 872 B1**
(45) Veröffentlichungstag und Bekanntmachung des Hinweises auf die Patenterteilung: **14.02.2024**
(21) Anmeldenummer: 19188997.1
(22) Anmeldetag: 30.07.2019
(51) Int. Cl.: B23K 26/06, B23K 26/067, H02G 1/12, B23K 101/32, B23K 101/38

(54) **VORRICHTUNG UND VERFAHREN ZUM BEARBEITEN EINES WERKSTÜCKS MITTELS LASERSTRAHLUNG**
DEVICE AND METHOD FOR PROCESSING A WORKPIECE BY MEANS OF A LASER BEAM
DISPOSITIF ET PROCÉDÉ DE TRAITEMENT D'UNE PIÈCE PAR RAYONNEMENT LASER

(30) Priorität: 30.07.2018 EP 18186214
(43) Veröffentlichungstag der Anmeldung: 05.02.2020
(73) Patentinhaber: Clean Lasersysteme GmbH, 52134 Herzogenrath (DE)
(72) Erfinder: Büchter, Edwin, 52134 Herzogenrath (DE); Barkhausen, Winfried, 52074 Aachen (DE)
(74) Vertreter: Müller, Thomas

(56) Entgegenhaltungen:
- DE-A1-102011 007 792
- DE-A1-102015 119 324
- US-A1- 2003 102 289
- US-B2- 7 215 454

## Beschreibung

Die vorliegende Erfindung betrifft zunächst eine Bearbeitungsvorrichtung zum Bearbeiten eines Werkstücks mittels Laserstrahlung gemäß dem Oberbegriff von Patentanspruch 1. Weiterhin betrifft die Erfindung auch ein Verfahren zum Bearbeiten eines Werkstücks mittels Laserstrahlung.

Die Bearbeitung von Werkstücken unter Zuhilfenahme von Laserstrahlung ist bereits seit langem bekannt und erfolgt auf unterschiedlichste Weise. Neben der Reinigung von Oberflächen ist ein breites Anwendungsfeld die Bearbeitung von Oberflächen. Dabei wird es zunehmend erforderlich, Werkstücke auch im kontinuierlichen Betrieb zu bearbeiten. Zu denken ist beispielsweise an das Entlacken von Drähten. Mit der zunehmenden Elektromobilität beispielsweise werden zunehmend lackierte Drähte eingesetzt, die an bestimmten Stellen entlackt werden müssen. Dafür eignet sich die Laserbearbeitung. Mittels der Laserstrahlung wird der Lack an den vorgesehenen Stellen vom Draht entfernt. Dies kann besonders vorteilhaft im so genannten Durchlaufverfahren realisiert werden, bei dem der Draht kontinuierlich durch eine Laser-Bearbeitungsvorrichtung hindurchgeführt und an den jeweiligen vorgesehenen Stellen mittels Laserstrahlung entlackt wird. Eine Herausforderung für diese Art der Bearbeitung stellt die Vorgabe dar, dass der Draht allseitig und gleichmäßig vom Lack befreit werden muss, so dass die Laserstrahlung von mehreren Seiten auf den Draht eingestrahlt werden muss. Eine ähnliche Problematik ergibt sich oftmals auch beim Laserschweißen oder Laserlöten.

In der DE 100 20 327 A1 ist eine Laser-Bearbeitungsvorrichtung beschrieben, mittels derer unter Verwendung von Laserstrahlung geschweißt oder gehärtet wird. Insbesondere sollen rotationssymmetrische Werkstücke allseitig bearbeitet werden. Dies wird durch eine ringförmige Fokussierung erreicht. Dabei wird eine Anzahl von Lasern an einem ringförmigen Bauelement angeordnet. Die einzelnen Laser strahlen das erzeugte Laserlicht radial nach innen in das Zentrum des ringförmigen Bauelements ab. Im Zentrum des ringförmigen Bauelements befindet sich auch die Bearbeitungszone, in der das zu bearbeitende rotationssymmetrische Werkstück positioniert ist. Der Fokus der einzelnen Laser liegt dabei jeweils in der Bearbeitungszone, so dass die Oberfläche des rotationssymmetrischen Werkstücks von den verschiedenen Lasern allseitig gleichmäßig bearbeitet wird.

Nachteilig bei dieser Lösung ist, dass eine Mehrzahl von voneinander unabhängigen Lasern verwendet wird. Diese müssen allesamt so positioniert werden, dass deren Fokuslänge stets gleich ist. Dabei muss jeder Laser einzeln fokussiert werden. Die bekannte Lösung ist somit aufwändig und teuer. Und wenn Werkstücke mit unterschiedlichen Geometrien bearbeitet werden sollen, ist der Aufwand sehr hoch, die einzelnen Laser erneut korrekt zu positionieren und einzustellen.

In der DE 10 2015 119 324 A1 wird eine Lösung zur Abisolierung von Kabeln mittels Laserstrahlung beschrieben. Die bekannte Lösung sieht eine Ablenkeinheit zur Ablenkung des Laserstrahls und zwei Umlenksieel vor und stellt die Grundlage für die Präambel der Ansprüche 1 und 11 dar. Insgesamt ermöglicht die bekannte Lösung drei Bearbeitungspunkte in Form von Einstrahlpunkten aus unterschiedlichen Einstrahlrichtungen, wobei zwei Bearbeitungspunkte über die Spiegel realisiert werden. In der DE 10 2011 007 792 A1, von der die vorliegende Erfindung ausgeht, wird eine Lösung mit vier Spiegeln beschrieben, mittels derer vier unterschiedliche Einstrahlrichtungen realisiert werden können.

Ausgehend vom genannten Stand der Technik liegt der vorliegenden Erfindung die Aufgabe zugrunde, die Bearbeitungsvorrichtung der eingangs genannten Art derart weiterzubilden, dass mit einer minimalen Anzahl von Erzeugungseinrichtungen zum Erzeugen von Laserstrahlen ein Werkstück allseitig und gleichmäßig bearbeiten zu können, wobei die Bearbeitung insbesondere im dynamischen Betrieb erfolgen soll. Weiterhin soll ein entsprechend verbessertes Bearbeitungsverfahren bereitgestellt werden.

Diese Aufgabe wird erfindungsgemäß gelöst durch die Vorrichtung zum Bearbeiten eines Werkstücks mittels Laserstrahlung mit den Merkmalen gemäß des unabhängigen Patentanspruchs 1, bei der es sich um den ersten Erfindungsaspekt handelt, sowie durch das Verfahren zum Bearbeiten eines Werkstücks mittels Laserstrahlung mit den Merkmalen gemäß des unabhängigen Patentanspruchs 11, bei dem es sich um den zweiten Erfindungsaspekt handelt. Weitere Merkmale und Details der vorliegenden Erfindung ergeben sich aus den Unteransprüchen, der Beschreibung sowie den Zeichnungen.

Merkmale und Details, die hinsichtlich des ersten Erfindungsaspekts beschrieben sind, gelten dabei vollumfänglich selbstverständlich auch hinsichtlich des zweiten Erfindungsaspekts, und umgekehrt, so dass wechselseitig hinsichtlich der Offenbarung eines Erfindungsaspekts stets vollinhaltlich auch auf den anderen Erfindungsaspekt Bezug genommen und verwiesen wird.

Ein grundlegendes Merkmal der vorliegenden Erfindung, die in den nachfolgend im Detail beschriebenen unterschiedlichen Erfindungsaspekten realisiert ist, besteht darin, dass einer minimalen Anzahl von Erzeugungseinrichtungen zur Erzeugung von Laserstrahlen eine Anzahl von Spiegeln zugeordnet wird. Die von der Erzeugungseinrichtung erzeugten Laserstrahlen werden über die verschiedenen, der Erzeugungseinrichtung zugeordneten Spiegel in eine Bearbeitungszone der Bearbeitungsvorrichtung eingestrahlt, wobei durch die Anordnung der Spiegel die von der Erzeugungseinrichtung erzeugten Laserstrahlen aus unterschiedlichen Einstrahlrichtungen in die Bearbeitungszone eingestrahlt werden, so dass insbesondere eine allseitige Bestrahlung eines in der Bearbeitungszone platzierten Werkstücks mit Laserlicht erreicht wird. Dabei kann insbesondere auch der Strahlweg eines jeden Laserstrahls von der Erzeugungseinrichtung bis hin zum Auftreffpunkt des Laserstrahls auf der Oberfläche des zu bearbeitenden Werkstücks, was insbesondere dem Fokus des Laserstrahls entspricht, individuell und unabhängig von den anderen Laserstrahlen eingestellt werden, insbesondere in Bezug auf die Strahlweglänge, die Position des Auftreffpunkts und die Strahlparameter der Laserstrahlen. Neben der Bearbeitung von rotationssymmetrischen Werkstücken kann die Erfindung deshalb auch für die Bearbeitung von profilierten und/oder asymmetrischen Werkstücken eingesetzt werden.

Wie dies im Einzelnen realisiert werden kann, wird nachfolgend anhand vorteilhafter Ausgestaltungen und Ausführungsformen in größerem Detail beschrieben.

Gemäß dem ersten Aspekt der Erfindung wird eine Bearbeitungsvorrichtung für die Bearbeitung eines Werkstücks mittels Laserstrahlung bereitgestellt, welche die Merkmale des unabhängigen Patentanspruchs 1 aufweist.

Mit der Bearbeitungsvorrichtung werden Werkstücke bearbeitet. Dabei ist die Erfindung grundsätzlich nicht auf bestimmte Werkstückarten und Werkstücktypen beschränkt. Bevorzugt werden mit der Bearbeitungsvorrichtung rotationssymmetrische Werkstücke wie beispielsweise Drähte, Rohre und dergleichen bearbeitet. Jedoch können in gleicher Weise auch rechteckige, quadratische oder anders ausgebildete, insbesondere auch profilierte und/oder asymmetrische, Werkstücke, bei denen es sich beispielsweis um Langprofilelemente handeln kann, bearbeitet werden. Die vorgenannten Werkstücke eignen sich besonders für eine dynamische Bearbeitung, insbesondere für eine durchgängige, kontinuierliche oder für eine getaktete Bearbeitung. Natürlich ist die Erfindung auch für andere Werkstückformen einsetzbar, die sich insbesondere allseitig, bearbeiten lassen. Ebenso kann die Erfindung auch für die stationäre Bearbeitung von Werkstücken eingesetzt werden.

Weiterhin ist die Erfindung auch nicht auf eine bestimmte Art der Bearbeitung beschränkt. So kann es sich bei der Bearbeitung um jede Form der Oberflächenbearbeitung handeln, etwa ein Entschichten, ein Entlacken, ein Vorbehandeln, ein Härten, ein Aufschweißen, ein Nachbearbeiten von Schweißnähten oder Lötstellen, ein Anlassen, ein Strukturieren, ein Markieren, ein Reinigen oder dergleichen. In einer bevorzugten Ausführungsform wird die Bearbeitungsvorrichtung zum Bearbeiten von Draht, insbesondere zum partiellen Bearbeiten von Draht, etwa einem Entlacken von lackiertem Draht, etwa Kupferdraht, eingesetzt. Gemäß einer anderen bevorzugten Ausführungsform wird die Bearbeitungsvorrichtung zum Vorbehandeln eines Werkstücks, insbesondere eines Drahtes, für eine spätere Bearbeitung, etwa eine Beschichtung, eingesetzt. Im Folgenden wird die Erfindung zu deren Verdeutlichung des Öfteren anhand eines Beispiels erläutert, bei dem ein Draht zumindest partiell entlackt werden soll. Die vorliegende Erfindung ist allerdings nicht auf dieses eine konkrete Beispiel beschränkt.

Die Bearbeitung des Werkstücks erfolgt erfindungsgemäß mittels Laserstrahlung. Zu diesem Zweck weist die Bearbeitungsvorrichtung wenigstens eine Erzeugungseinrichtung zum Erzeugen von Laserstrahlen auf. Die Erzeugungseinrichtung, die weiter unten näher beschrieben ist, hat die Funktion, die für die Bearbeitung des Werkstücks erforderliche Laserstrahlung zu erzeugen und in der für die Bearbeitung des Werkstücks erforderlichen Weise bereitzustellen. Derartige Erzeugungseinrichtungen sind im Stand der Technik grundsätzlich bekannt und dem Fachmann geläufig.

Für die Erfindung ausreichend ist es, wenn die Bearbeitungsvorrichtung eine einzige Erzeugungseinrichtung zum Erzeugen von Laserstrahlen aufweist. In einer bevorzugten Ausführungsform ist deshalb realisiert, dass die Bearbeitungsvorrichtung eine einzige Erzeugungseinrichtung zum Erzeugen von Laserstrahlen aufweist. Natürlich kann die Bearbeitungsvorrichtung auch zwei oder mehr Erzeugungseinrichtungen zum Erzeugen von Laserstrahlen aufweisen. In einer anderen bevorzugten Ausführungsform weist die Bearbeitungsvorrichtung zwei solcher Erzeugungsvorrichtungen zum Erzeugen von Laserstrahlen auf. Die Verwendung von mehr als einer Erzeugungseinrichtung hat den Vorteil, dass damit die Bearbeitungszeit verkürzt werden kann. Werden zwei Erzeugungseinrichtungen verwendet, können diese beispielsweise an sich gegenüberliegenden Positionen in der Bearbeitungseinrichtung, insbesondere in Bezug auf die Bearbeitungszone, angeordnet oder vorgesehen sein. In anderer Ausgestaltung können die Erzeugungseinrichtungen auch in einer Reihe hintereinander in der Bearbeitungsvorrichtung angeordnet oder vorgesehen sein.

Je nach Ausgestaltung weist die Erzeugungseinrichtung für die Erzeugung der Laserstrahlen eine Anzahl verschiedener Komponenten auf. Eine Grundkomponente der Erzeugungseinrichtung stellt dabei eine Laserquelle zur Erzeugung der Laserstrahlen dar. In einer bevorzugten Ausführungsform ist die Laserquelle als eine so genannte gepulste Laserquelle ausgebildet, was bedeutet, dass damit eine gepulste Laserstrahlung in Form von Laserpulsen erzeugt wird. Natürlich ist die Erfindung auch mit anderen Typen von Laserquellen realisierbar, mit einer Laserquelle in Form eines Festkörperlasers zum Beispiel. Aus diesem Grund ist die Erfindung nicht auf bestimmte Typen von Laserquellen beschränkt. Bei einer weiteren Komponente der Erzeugungseinrichtung für die Laserstrahlen handelt es sich beispielsweise um eine Scannereinrichtung. Die Scannereinrichtung ist in Strahlrichtung der erzeugten Laserstrahlen bevorzugt der Laserquelle nachgeordnet. In der Scannereinrichtung, die dem Fachmann an sich bekannt ist, so dass auf deren Funktionsweise an dieser Stelle nicht im Detail eingegangen werden muss, werden die von der Laserquelle erzeugten Laserstrahlen abgelenkt, so das verschiedene Bereiche des Werkstücks bearbeitet werden können. Die Scannereinrichtung weist grundsätzlich einen Scankopf, in dem die erzeugten Laserstrahlen abgelenkt werden, und eine Steuereinrichtung auf. Mittels der Steuereinrichtung werden insbesondere entsprechende Steuersignale und Steuerbefehle an den Scankopf abgegeben, mittels derer die erzeugten Laserstrahlen in durch die Steuersignale und Steuerbefehle vorgegebener Weise abgelenkt werden. Mittels der Scannereinrichtung wird somit ein Arbeitsfeld generiert, das auch als Scanfeld bezeichnet wird. Durch das Arbeitsfeld wird der mögliche zu bearbeitende Bereich des Werkstücks festgelegt. Das Arbeitsfeld umfasst somit den zu bearbeitenden Bereich des Werkstücks.

Die Austrittsposition des Laserstrahls aus der Scannereinrichtung bestimmt insbesondere den Strahlweg der Laserstrahlen innerhalb der Bearbeitungsvorrichtung und damit die Auftreffposition des Laserstrahls innerhalb der Bearbeitungsvorrichtung, was weiter unten in größerem Detail beschrieben wird.

Der Scannereinrichtung ist optional in Strahlrichtung der erzeugten Laserstrahlen ein Objektivelement, vorzugsweise mit wenigstens einer Fokussierlinse, und/oder eine Fokussiereinrichtung nachgeordnet. In einer anderen Ausführungsform sind die vorgenannten Elemente in Strahlrichtung der Laserstrahlen vor der Scannereinrichtung angeordnet. Die vorgenannten Elemente können auch Bestandteil der Scannereinrichtung sein. In anderer Ausgestaltung weist die Erzeugungseinrichtung bevorzugt eine Zoomeinrichtung und/oder eine Einrichtung zu Verändern der Brennweite der Laserstrahlen auf. Diese Komponenten können beispielsweise Bestandteil der Scannereinrichtung oder des Objektivelements sein.

Weitere Komponenten der Erzeugungseinrichtung können ein Modul zum Ablenken des erzeugten Laserlichts in Z-Richtung sein, da mit der Scannereinrichtung in erster Linie eine Ablenkung der Laserstrahlen in X-Richtung und Y-Richtung erfolgt. Weiterhin kann die Erzeugungseinrichtung für die Erzeugung der Laserstrahlen weitergehende Komponenten aufweisen, was dem Fachmann an sich geläufig ist.

Erfindungsgemäß weist die Bearbeitungsvorrichtung eine der wenigstens einen Erzeugungseinrichtung zugeordnete Einstrahleinrichtung auf, die zum Einstrahlen der erzeugten Laserstrahlen aus mehreren unterschiedlichen Einstrahlrichtungen in eine Bearbeitungszone der Bearbeitungsvorrichtung ausgebildet ist. Die Bearbeitungsvorrichtung weist eine Bearbeitungszone auf, die zur Aufnahme des zu bearbeitenden Werkstücks ausgebildet ist, und in der sich das Werkstück während des Bearbeitungsvorgangs befindet. Die Einstrahleinrichtung ist in Strahlrichtung der erzeugten Laserstrahlen der Erzeugungseinrichtung nachgeordnet. Sie weist insbesondere diejenigen Komponenten der Bearbeitungsvorrichtung auf, die erforderlich sind, um die in der Erzeugungseinrichtung erzeugten Laserstrahlen, die die Erzeugungseinrichtung an einem Austrittspunkt derselben verlassen, innerhalb der Bearbeitungsvorrichtung in die Bearbeitungszone zu lenken, wo die Laserstrahlen zur Bearbeitung des in der Bearbeitungszone befindlichen Werkstücks verwendet werden. Das in der Bearbeitungsvorrichtung zu bearbeitende Werkstück wird in der Bearbeitungszone positioniert und dort im Betriebszustand der Bearbeitungsvorrichtung bearbeitet.

Ist die Bearbeitungsvorrichtung für eine dynamische, insbesondere für eine kontinuierliche oder getaktete, Bearbeitung von Werkstücken ausgebildet, wird das Werkstück während der Bearbeitungsphase, das heißt im Betriebszustand der Bearbeitungsvorrichtung, durch die Bearbeitungsvorrichtung, und insbesondere durch die Bearbeitungszone, hindurchgeführt. Dies erfolgt vorzugsweise in einer definierten Vorschubrichtung und/oder mit einer Vorschubgeschwindigkeit. Wie dies realisiert werden kann, wird weiter unten näher beschrieben. Die vorliegende Erfindung ist nicht auf bestimmte Vorschubgeschwindigkeiten beschränkt. Beispielsweise kann die Vorschubgeschwindigkeit zwischen 0 mm/sec und 500 mm/sec betragen. Je nach Ausgestaltung kann die Vorschubgeschwindigkeit eine konstante Vorschubgeschwindigkeit oder eine variable Vorschubgeschwindigkeit sein. Für das letztgenannte Beispiel bedeutet dies, dass sich die Vorschubgeschwindigkeit während des Bearbeitungsvorgangs des Werkstücks verändert. Höhe und Art der Vorschubgeschwindigkeit ergeben sich insbesondere nach Art und Umfang der am Werkstück vorzunehmenden Bearbeitung. Bei einer variablen Vorschubgeschwindigkeit ist bevorzugt realisiert, dass die Variation der Geschwindigkeit, vorzugsweise in Echtzeit, über die Steuereinrichtung der Erzeugungseinrichtung zurückgeführt und von der Positionierung der Scannereinrichtung relativ zum Werkstück berücksichtig wird.

Über die Einstrahleinrichtung, die im Folgenden im Detail beschrieben wird, werden die von der Erzeugungseinrichtung erzeugten Laserstrahlen aus mehreren Einstrahlrichtungen in die Bearbeitungszone eingestrahlt, so dass ein in der Bearbeitungszone platziertes oder durch diese hindurchgeführtes Werkstück von mehreren Seiten, vorzugsweise allseitig, mit den Laserstrahlen bestrahlt wird beziehungsweise werden kann.

Damit dies in einer gleichmäßigen Weise geschieht, ist die Einstrahleinrichtung in einer Weise bereitgestellt, dass der Fokus der aus den unterschiedlichen Einstrahlrichtungen eingestrahlten Laserstrahlen in einer Fokuszone liegt, welche mit der Bearbeitungszone korrespondiert. Die Fokuszone ist dabei insbesondere ein abgeschlossener, begrenzter Bereich, in dem die einzelnen aus den verschiedenen Einstrahlrichtungen eingestrahlten Laserstrahlen fokussiert sind. Ein Korrespondieren der Fokuszone mit der Bearbeitungszone bedeutet insbesondere, dass diese beiden Zonen miteinander in Beziehung stehen. Bevorzugt ist, wenn die beiden Zonen zusammenfallen. Das Zusammenfallen der beiden Zonen kann bedeuten, dass beide Zonen gleich dimensioniert sind, so dass in diesem Fall die Fokuszone der Bearbeitungszone entspricht. In anderer Ausgestaltung kann die Bearbeitungszone im Vergleich zur Fokuszone größer dimensioniert sein. In diesem Fall ist die Fokuszone innerhalb der Bearbeitungszone ausgebildet, insbesondere um das Zentrum der Bearbeitungszone herum. Beispielsweise kann die Fokuszone punktförmig oder linienförmig, insbesondere axial in Richtung des Werkstücks ausgebildet sein, vorzugsweise genau im Zentrum der Bearbeitungszone. In diesem Fall sind alle über die verschiedenen Einstrahlrichtungen eingestrahlten Laserstrahlen in der als Fokuspunkt oder Fokuslinie ausgebildeten Fokuszone fokussiert. In anderer bevorzugter Ausgestaltung ist die Fokuszone ringförmig oder zylinderförmig, insbesondere axial in Richtung des Werkstücks ausgebildet. Ein ringförmiger oder zylinderförmiger Fokus ist insbesondere für die Bearbeitung von rotationssymmetrischen Werkstücken wie Drähten, Rohren und dergleichen geeignet, da sich hier die zu bearbeitende Werkstückoberfläche nicht im Zentrum der Bearbeitungszone befindet. Bevorzugt entspricht die Fokuszone von ihrer Dimensionierung her der Dimensionierung der Oberfläche des zu bearbeitenden Werkstücks. In diesem Fall sind die Laserstrahlen, insbesondere deren Strahlwege, durch die Erzeugungseinrichtung, insbesondere durch die weiter oben beschriebenen Komponenten der Erzeugungseinrichtung, so eingestellt, dass der Fokus der einzelnen Laserstrahlen auf der Oberfläche des zu bearbeitenden Werkstücks liegt. Da die Fokuszone mit der Bearbeitungszone korrespondiert, ist erfindungsgemäß realisiert, dass die einzelnen Laserstrahlen, die aus den verschiedenen Einstrahlrichtungen auf das zu bearbeitende Werkstück eingestrahlt werden, auf der Oberfläche des Werkstücks fokussiert werden beziehungsweise sind. Üblicherweise tritt der Laserstrahl kegelförmig aus der Erzeugungseinrichtung aus, wird gebündelt und hat seinen dünnsten Punkt, den man Fokus nennt oder auch als Brennpunkt bezeichnet, in der Fokuszone, vorzugsweise aber nicht notwendigerweise auf der Oberfläche des zu bearbeitenden Werkstücks.

Erfindungsgemäß ist die Einstrahleinrichtung in besonderer Weise ausgestaltet. Die Einstrahleinrichtung weist eine Anzahl von Spiegeln auf, welche zur Einstrahlung der Laserstrahlen in den unterschiedlichen Einstrahlrichtungen bereitgestellt sind. Dies geschieht insbesondere in einer Weise, dass die in der Erzeugungseinrichtung erzeugten Laserstrahlen beim Austritt aus der Erzeugungseinrichtung so abgelenkt werden, dass sie auf die verschiedenen Spiegel auftreffen und von dort in Richtung des zu bearbeitenden Werkstücks reflektiert werden, so dass die Laserstrahlen aus verschiedenen Einstrahlrichtungen in die Bearbeitungszone beziehungsweise auf das in der Bearbeitungszone befindliche zu bearbeitende Werkstück eingestrahlt werden. Wenn die Erzeugungseinrichtung eine Scannereinrichtung aufweist, bestimmt die Austrittsposition des Laserstrahls aus der Scannereinrichtung, hervorgerufen durch eine entsprechende Ablenkung in der Scannereinrichtung, den Strahlweg der Laserstrahlen und damit den Auftreffort, beispielsweise die Auftreffseite beziehungsweise den entsprechenden Spiegel, insbesondere die Spiegelfläche des entsprechenden Spiegels. Vorteilhaft bei einer solchen Vorgehensweise ist insbesondere, dass ein Wechsel des Auftrefforts, beispielsweise ein Wechsel der Seiten, instantan und nahezu ohne Zeitverlust, beispielsweise bei einer Positioniergeschwindigkeit von größer 1m/s, vorzugsweise größer 10m/s, erfolgt.

Bevorzugt weist die Bearbeitungsvorrichtung ein definiertes Arbeitsfeld auf, insbesondere ein rautenförmiges oder elliptisches oder rechteckiges Arbeitsfeld, wobei die Erfindung nicht auf diese Art von Arbeitsfeldern beschränkt ist. Derartige Arbeitsfelder werden in der Figurenbeschreibung weiter unten näher erläutert, so dass an dieser Stelle insbesondere auch auf die entsprechenden Ausführungen in der Figurenbeschreibung weiter unten vollinhaltlich Bezug genommen wird, um die allgemeine Bedeutung dieses Merkmals zu beschreiben und zu definieren. Das Arbeitsfeld wird mittels der Erzeugungseinrichtung, insbesondere durch die Scannereinrichtung, und optional auch mittels der Spiegel, festgelegt.

Bevorzugt sind die Spiegel außenliegend zur Bearbeitungszone in der Bearbeitungsvorrichtung angeordnet, so dass ein Werkstück, welches sich in der Bearbeitungszone befindet, von den einzelnen Spiegeln der Einstrahleinrichtung umgeben ist. Die Spiegel befinden sich somit außerhalb der Bearbeitungszone und sind insbesondere um die Bearbeitungszone herum angeordnet. Insbesondere sind die Spiegel radial außenliegend zur Bearbeitungszone in der Bearbeitungsvorrichtung angeordnet.

Die vorliegende Erfindung ist nicht auf eine bestimmte Anzahl von Spiegeln beschränkt. Die Anzahl der Spiegel hängt insbesondere von der Anzahl der zu realisierenden unterschiedlichen Einstrahlrichtungen der Laserstrahlen ab. Bevorzugt ist über jeweils einen Spiegel eine bestimmte Einstrahlrichtung der Laserstrahlen in die Bearbeitungszone und insbesondere auf das zu bearbeitende Werkstück realisiert.

In einer bevorzugten Ausführungsform weist die Einstrahleinrichtung vier Spiegel zum Einstrahlen der erzeugten Laserstrahlen aus vier unterschiedlichen Einstrahlrichtungen in die Bearbeitungszone auf. Vorzugsweise sind die vier Spiegel gleichmäßig verteilt, insbesondere jeweils mit gleich großen Abständen zueinander, außenliegend, insbesondere radial außenliegend, um die Bearbeitungszone herum angeordnet.

In einer bevorzugten Ausführungsform sind zwei oder mehr Spiegel, vorzugsweise vier Spiegel, jeweils einer Erzeugungseinrichtung zugeordnet. Mittels der Erzeugungseinrichtung und einer entsprechenden Ablenkung der erzeugten Laserstrahlen in der Erzeugungseinrichtung werden die erzeugten Laserstrahlen nach dem Austritt aus der Erzeugungseinrichtung wahlweise oder in einer bestimmten Reihenfolge auf die der Erzeugungseinrichtung zugeordneten Spiegel gelenkt beziehungsweise gestrahlt, und von dort in Richtung der Bearbeitungszone reflektiert. Die Ablenkung der Laserstrahlen auf den jeweiligen Spiegel erfolgt bevorzugt in der Scannereinrichtung. Das heißt, mit einer Erzeugungseinrichtung können Laserstrahlen aus so vielen verschiedenen Einstrahlrichtungen in die Bearbeitungszone eingestrahlt werden, wie Spiegel der jeweiligen Erzeugungseinrichtung zugeordnet sind. Die Zuordnung der Spiegel zur Erzeugungseinrichtung bedeutet insbesondere, dass es sich bei den betreffenden Spiegeln um diejenigen Spiegel handelt, auf welche die von der dazugehörigen Erzeugungseinrichtung erzeugten Laserstrahlen gelenkt werden. Das können je nach Ausgestaltung alle Spiegel der Einstrahleinrichtung sein, oder aber nur eine Teilmenge aller Spiegel der Einstrahleinrichtung.

Hierzu werden nachfolgend bevorzugte Ausführungsbeispiele beschrieben, bei der eine oder mehrere Erzeugungseinrichtung(en) zur Erzeugung von Laserstrahlen zum Einsatz kommtlkommen.

In einer ersten bevorzugten Ausführungsform weist die Bearbeitungsvorrichtung eine einzige Erzeugungseinrichtung auf, wobei alle Spiegel der Einstrahleinrichtung der Erzeugungseinrichtung zugeordnet sind. Das bedeutet, dass die von der Erzeugungsvorrichtung erzeugten Laserstrahlen, insbesondere durch eine entsprechende Ablenkung, auf alle Spiegel gerichtet und von diesen in Richtung der Bearbeitungszone reflektiert werden. Dies erfolgt bevorzugt in einer bestimmten, vorgegebenen Reihenfolge. Damit kann das in der Bearbeitungszone befindliche Werkstück aus verschiedenen Einstrahlrichtungen, die durch die entsprechenden Spiegel vorgegeben sind, vorzugsweise allseitig, mit Laserstrahlen bestrahlt und entsprechend bearbeitet werden. In einer bevorzugten Ausführungsform sind der einzigen Erzeugungseinrichtung vier Spiegel zugeordnet, die die Bearbeitungszone umgeben, so das in deren Zentrum sich die Bearbeitungszone mit dem darin zu platzierenden oder platzierten Werkstück befindet. Die Erzeugungseinrichtung erzeugt insbesondere ein elliptisches oder rautenförmiges oder rechteckiges Arbeitsfeld. In einer anderen Ausführungsform weist die Bearbeitungsvorrichtung zwei Erzeugungseinrichtungen auf, wobei jeder Erzeugungseinrichtung jeweils eine Teilanzahl der insgesamt um die Bearbeitungszone herum angeordneten Spiegel, beispielsweise jeweils zwei Spiegel, zugeordnet ist/sind.

Die einzelnen Spiegel sind in allen Fällen im Strahlweg der Laserstrahlen zwischen einem Austrittspunkt der Laserstrahlen aus der wenigstens einen Erzeugungseinrichtung und dem Fokus der Laserstrahlen angeordnet. Der Austrittspunkt der Laserstrahlen befindet sich insbesondere dort, wo die Laserstrahlen die Erzeugungseinrichtung verlassen, Wenn die Erzeugungseinrichtung eine Scannereinrichtung aufweist, befindet sich der Austrittspunkt beispielsweise dort, wo die Laserstrahlen die Scannereinrichtung verlassen. Wenn die Erzeugungseinrichtung zusätzlich oder alternativ ein Objektivelement aufweist, befindet sich der Austrittspunkt am Ausgang des Objektivelements.

Erfindungsgemäß ist die wenigstens eine Erzeugungseinrichtung in einer Weise ausgebildet, dass sie in der Lage ist, die erzeugten Laserstrahlen wahlweise oder in einer vorgegebenen Bearbeitungsreigenfolge über die Spiegel in die Bearbeitungszone einzustrahlen. In einer bevorzugten Ausführungsform werden die erzeugten Laserstrahlen nacheinander über die verschiedenen Spiegel in die Bearbeitungszone eingestrahlt. Die Bearbeitungsvorrichtung weist bevorzugt eine Steuereinrichtung auf, die derart bereitgestellt ist, dass sie in der Lage ist, die Strahlparameter der erzeugten Laserstrahlen und/oder die Einstrahlparameter der einzelnen Spiegel zum Einstrahlen der Laserstrahlen in die Bearbeitungszone individuell und jeweils unabhängig von den anderen Laserstrahlen und Spiegeln zu beeinflussen und einzustellen. Diese Steuereinrichtung kann mit der weiter oben beschriebenen Steuereinrichtung der Scannereinrichtung zusammengefasst sein.

Wenn in einer bevorzugten Ausführungsform vier Spiegel vorhanden sind, sind diese bevorzugt gleichmäßig verteilt um die Bearbeitungszone herum angeordnet. In einer bevorzugten Ausführungsform befindet sich, vom Werkstück aus gesehen, ein erster Spiegel oben rechts, ein zweiter Spiegel unten rechts, ein dritter Spiegel unten links und ein vierter Spiegel oben links. Die erzeugten Laserstrahlen werden in einer bestimmten Reihgenfolge nacheinander auf die verschiedenen Spiegel gerichtet und von dort in Richtung der Bearbeitungszone und das darin befindliche zu bearbeitende Werkstück reflektiert. Die dafür erforderliche Ablenkung der Laserstrahlen erfolgt bevorzugt in der Scannereinrichtung der Erzeugungseinrichtung. In einer bevorzugten Ausgestaltung werden die Laserstrahlen in der vorstehend genannten Nummerierung der Spiegel nacheinander in der Reihenfolge erster Spiegel, zweiter Spiegel, dritter Spiegel, vierter Spiegel auf die Spiegel gelenkt. Andere bevorzugte Strahlreihenfolgen auf die verschiedenen Spiegel werden im Zusammenhang mit der Figurenbeschreibung weiter unten beschrieben, so dass an dieser Stelle auch auf diese entsprechenden Ausführungen weiter unten vollinhaltlich Bezug genommen wird.

Bevorzugt wird die gesamte Spiegellänge, das ist die nutzbare Bearbeitungslänge des Spiegels, in Vorschubrichtung des zu bearbeitenden Werkstücks mit einem definierten Arbeitsfeld genutzt, welches insbesondere eine elliptische oder rautenförmige oder rechteckige Form aufweist.

Bevorzugt sind die Position und die Größe der Spiegel in Abhängigkeit der Bearbeitungsreihenfolge so gewählt, dass die Spiegelfläche minimiert ist, was insbesondere zu einer Kostenreduktion führt.

Bevorzugt ist ferner, dass die Spiegelfläche der einzelnen Spiegel das, insbesondere rautenförmige oder elliptische oder rechteckige, Arbeitsfeld optimal ausnutzt, so dass in Längsrichtung des Arbeitsfeldes die Bearbeitung unterbrechungsfrei auf einer maximalen Länge ausgeführt wird oder werden kann.

Erfindungsgemäß weist die Bearbeitungszone eine definierte Erstreckungsrichtung auf. Das heißt, die Bearbeitungszone dehnt sich in dieser definierten Erstreckungsrichtung aus.

Bevorzugt entspricht die definierte Erstreckungsrichtung deshalb der Ausdehnung der Bearbeitungszone in Längsrichtung. Wird die Bearbeitungsvorrichtung zur dynamischen Bearbeitung von Werkstücken verwendet, fällt die definierte Erstreckungsrichtung bevorzugt mit der Vorschubrichtung des Werkstücks durch die Bearbeitungszone zusammen. Die Erstreckungsrichtung ist in diesem Fall die Richtung vom Beginn der Bearbeitungszone aus gesehen, wo das Werkstück in die Bearbeitungszone eintritt, hin zum Ende der Bearbeitungszone, wo das Werkstück die Bearbeitungszone verlässt.

Erfindungsgemäß sind die einzelnen Spiegel der Einstrahleinrichtung in der definierten Erstreckungsrichtung versetzt zueinander beziehungsweise gegeneinander angeordnet. Das bedeutet, dass sich die Spiegel nicht auf gleicher Höhe befinden und sich somit jeweils nicht im gleichen Abstand zum Beginn der Bearbeitungszone befinden. Vielmehr bedeutet ein Versatz der Spiegel, dass die einzelnen Spiegel jeweils einen unterschiedlichen Abstand zum Beginn der Bearbeitungszone aufweisen. Die Spiegel nehmen somit in Erstreckungsrichtung und bezogen auf den Beginn der Bearbeitungszone in der Bearbeitungszone unterschiedliche Längspositionen relativ zueinander ein.

Dies soll exemplarisch anhand des folgenden Beispiels erläutert werden. Bei der dynamischen Bearbeitung wird das Werkstück während der Laserbearbeitung kontinuierlich bewegt. Dies bedeutet, dass eine Fläche, die als erstes bearbeitet wird, im Nachfolgenden einen weiteren Weg - in Erstreckungsrichtung, beispielsweise in Vorschubrichtung - zurücklegt, als eine Fläche, die später bearbeitet wird. Dies bedeutet in einer konkreten Ausgestaltung, dass derjenige Spiegel, welcher als erstes für die Bearbeitung eines Winkel-Teilsegmentes des Werkstücks genutzt wird, sich näher am Eintritt des Werkstücks in die Bearbeitungszone, und damit am Werkstückeintritt, befinden muss. Der Spiegel, welcher das zweite Winkel-Teilsegment bearbeitet, ist gegenüber dem ersten Spiegel um einen gewissen Abstand - in Erstreckungsrichtung, beispielsweise in Vorschubrichtung des Werkstücks - versetzt. Dies gilt analog für jeden weiteren Spiegel und zwar exakt in der Reihenfolge, in der die Spiegel für die Bearbeitung von Winkel-Teilsegmenten des Werkstücks benutzt werden.

Ein günstiger Abstand, das heißt Versatz der Spiegel zueinander, ergibt sich beispielsweise aus der folgenden Formel: Die Vorschubgeschwindigkeit des Werkstücks multipliziert mit der benötigten Bearbeitungszeit für sämtliche Spiegel ergibt den Vorschub des Werkstücks während eines kompletten Bearbeitungs-Taktes. Bei einer angenommenen gleichförmigen Bearbeitung über alle Spiegel, beispielsweise über alle vier Spiegel, ergibt sich als geeigneter Versatz der Spiegel jeweils 1/x-tel des kompletten Werkstück-Vorschubs, mit x gleich Anzahl der Spiegel.

Für ein konkretes Beispiel mit vier Spiegeln gelten gemäß einem konkreten Zahlenbeispiel folgende Zusammenhänge: Vorschubgeschwindigkeit: 20mm/s; Bearbeitungs-Zeit (komplett umlaufend): 5 Sekunden; Vorschub des Werkstücks während des Bearbeitungs-Taktes: 100mm (20mm/s x 5s); geteilt durch vier ergibt 25mm Versatz der einzelnen Spiegel zueinander.

Durch die erfindungsgemäße Ausgestaltung der Bearbeitungsvorrichtung ist es ermöglicht, dass die Laserstrahlen aus verschiedenen Einstrahlrichtungen auf das zu bearbeitende Werkstück eingestrahlt werden, so dass das Werkstück insbesondere allseitig bearbeitet werden kann. Durch die Möglichkeit, dass jeder Laserstrahl individuell eingestellt werden kann, ist insbesondere realisierbar, dass jeder Laserstrahl, der aus einer bestimmten Einstrahlrichtung auf das zu bearbeitende Werkstück trifft, eine individuelle und zu den anderen Laserstrahlen, die aus anderen Einstrahlrichtungen auf das Werkstück treffen, verschiedene Strahlcharakteristik aufweist, Insbesondere kann auf diese Weise realisiert werden, dass zumindest einzelne Laserstrahlen einen unterschiedlich langen Strahlweg zwischen dem Austrittspunkt der Laserstrahlen aus der Erzeugungseinrichtung und deren Fokus aufweisen. Dadurch lassen sich insbesondere Werkstücke mit nicht gleichmäßigen Oberflächen und Konturen bearbeiten.

In einer bevorzugten Ausführungsform ist realisiert, dass der Strahlweg aller Laserstrahlen zwischen dem Austrittspunkt der Laserstrahlen über jeden der Spiegel zum Fokus der Laserstrahlen aus den verschiedenen Einstrahlrichtungen jeweils gleich lang ist. Dadurch ist sichergestellt, dass der Fokus der einzelnen Laserstrahlen, die vom Austrittspunkt der Erzeugungseinrichtung über die jeweiligen Spiegel in die Fokuszone, und damit in die Bearbeitungszone laufen, allesamt in der Fokuszone, insbesondere auch auf der Oberfläche des in der Bearbeitungszone befindlichen Werkstücks, beispielsweise ringförmig bei rotationssymmetrischen Werkstücken, fokussiert wird beziehungsweise ist.

Insbesondere dann, wenn sich die einzelnen Spiegel in unterschiedlichem Abstand von dem Austrittspunkt der Erzeugungseinrichtung befinden, was insbesondere der Fall ist, wenn sämtliche Spiegel einer einzigen Erzeugungseinrichtung zugeordnet sind, wird es erforderlich, den Strahlweg der Laserstrahlen über diejenigen Spiegel, die dem Austrittspunkt näher liegen, in geeigneter Weise zu verlängern, damit diese Strahlwege die gleiche Länge haben wie diejenigen Strahlwege über diejenigen Spiegel die vom Austrittspunkt weiter entfernt liegen.

Dies ist bevorzugt dadurch realisiert, dass in wenigstens einem Strahlweg der Laserstrahlen zwischen dem Austrittspunkt der Laserstrahlen über den Spiegel zum Fokus der Laserstrahlen vor dem Spiegel wenigstens ein Weg-Kompensationselement angeordnet ist. Das Weg-Kompensationselement korrespondiert dann mit dem entsprechenden dazugehörigen Spiegel. Entweder ist in jedem Strahlweg eines Laserstrahls, in dem dies erforderlich ist, wenigstens ein solches Weg-Kompensationselement angeordnet. Oder aber ein gemeinsames Weg-Kompensationselement kann für mehrere unterschiedliche Laserstrahlen gemeinsam genutzt werden-Durch ein solches Weg-Kompensationselement kann insbesondere die Fokussierlänge der entsprechenden Laserstrahlen durch eine Weg-Kompensationsumlenkung kompensiert werden. Bei einem solchen Weg-Kompensationselement handelt es sich bevorzugt um einen Weg-Kompensationsspiegel, der die Strahlwege der Laserstrahlen gleich macht. In einer bevorzugten Ausführungsform handelt es sich bei dem Weg-Kompensationselement um ein dreieckiges Weg-Kompensationselement. In einer bevorzugten Ausführungsform wird das Weg-Kompensationselement durch zwei Spiegel gebildet, die auf den Schenkeln eines dreieckigen Basiskörpers angeordnet sind, oder die in Richtung zweier Schenkel eines Dreiecks ausgerichtet sind. In einer anderen Ausführungsform ist das Weg-Kompensationselement als ein dreieckiges Prisma ausgebildet. In einem solchen Fall kann ein einziges Weg-Kompensationselement genutzt werden, um einen vom Austrittspunkt der Erzeugungseinrichtung austretenden Laserstrahl je nach Bedarf in zwei unterschiedliche Richtungen abzulenken, je nachdem, auf welche Seitenfläche des Weg-Kompensationselements der Laserstrahl auftrifft.

Die Länge des Weg-Kompensationselements entspricht dabei bevorzugt der Länge der korrespondierenden Spiegel. Bevorzugt liegt das Weg-Kompensationselement auf der Mittelachse des Arbeitsfeldes.

Bevorzugt sind zumindest einzelne Spiegel fest oder einstellbar beweglich in der Bearbeitungsvorrichtung angeordnet. Wenn die Spiegel, insbesondere über die weiter oben beschriebene Steuereinrichtung, einstellbar beweglich sind, können diese bevorzugt einzeln und unabhängig voneinander beweglich sein. Die Bewegung der Spiegel kann manuell oder automatisch erfolgen. Bevorzugt ist vorgesehen, dass die Spiegel in Winkel und/oder Position einstellbar sind. Natürlich sind auch Kombinationen, beispielsweise von festen und von einstellbar beweglichen Spiegeln von der Erfindung mitumfasst.

Bevorzugt ist die wenigstens eine Erzeugungseinrichtung ausgebildet, dass sie in der Lage ist, die Länge des Arbeitsbereichs in der Bearbeitungszone einzustellen, vorzugsweise in einem Bereich zwischen 10 mm und 500 mm.

Alternativ oder zusätzlich ist die wenigstens eine Erzeugungseinrichtung für eine Variation der Brennweite ausgebildet, um den Fokusabstand der Laserstrahlen zwischen dem Austrittspunkt und der Fokuszone zu verstellen. Beispielsweise kann die Erzeugungseinrichtung zum Verändern des Fokusabstands in einem Bereich zwischen 100 mm und 500 mm ausgebildet sein. Bevorzugt kann die Erzeugungseinrichtung derart bereitgestellt sein, dass damit die Strahlweglänge der Laserstrahlen, insbesondere mittels der Steuereinrichtung, bei Bedarf veränderbar ist beziehungsweise verändert werden kann, beispielsweise um bis zu +/-20% der Strahlweglänge. Damit kann beispielsweise auf unterschiedliche Dicken im zu bearbeitenden Werkstück reagiert werden, ohne dass eine Veränderung der Spiegel erforderlich wird. Die Veränderung der Strahlweglänge kann insbesondere für jeden Spiegel individuell einstellbar sein.

Mittels einer wie weiter oben beschriebenen Fokuseinrichtung ist insbesondere eine Fokus-Verstellung möglich. Damit kann der Strahlweg der erzeugten Laserstrahlen im Fokusabtsand variiert werden beispielsweise um bis zu +/- 20%. Damit kann für jeden Laserstrahl aus den verschiedenen Einstrahlrichtungen, insbesondere individuell, der optimale Abstand zur Oberfläche des zu bearbeitenden Werkstücks eingestellt werden. Damit können insbesondere Geometrieschwankungen im Werkstück ausgeglichen werden.

Alternativ oder zusätzlich ist die wenigstens eine Erzeugungseinrichtung ausgebildet, um den Verlauf der erzeugten Laserstrahlen innerhalb der Einstrahleinrichtung in der X-Richtung und/oder der Y-Richtung und/oder der Z-Richtung zu verändern.

Beispielsweise ist die Bearbeitungsvorrichtung für eine statische Bearbeitung des Werkstücks ausgebildet. Bevorzugt ist die Bearbeitungsvorrichtung jedoch für eine dynamische Bearbeitung von Werkstücken ausgebildet. Eine dynamische Bearbeitung bedeutet insbesondere, dass sich das Werkstück während der Bearbeitung in der Bearbeitungszone hinsichtlich seiner Lage und Position verändert. Das bedeutet, dass sich das Werkstück während der Bearbeitung durch die Bearbeitungszone hindurchbewegt.

Diese Bewegung durch die Bearbeitungszone erfolgt bevorzugt in einer definierten Vorschubrichtung und/oder mit einer Vorschubgeschwindigkeit. Unter Vorschub wird dabei insbesondere eine Vorwärtsbewegung des Werkstücks durch die Bearbeitungsvorrichtung, und insbesondere durch die Bearbeitungszone, verstanden. Bei der Vorschubgeschwindigkeit handelt es sich bevorzugt um eine konstante oder variable Vorschubgeschwindigkeit. Eine variable Vorschubgeschwindigkeit ermöglicht beispielsweise die Anpassung der Werkstückbearbeitung an Prozessrestriktionen bei nachfolgenden Prozessen, wie beispielsweise dem Biegen, Schneiden oder dergleichen des Werkstücks. Manche Nachfolgeprozesse dürfen nicht mit einer gleichförmigen Bewegung des Werkstücks ausgeführt werden.

Bevorzugt ist die Bearbeitungsvorrichtung für eine Bearbeitung des Werkstücks im Durchlauf ausgebildet. In diesem Fall kann das Werkstück, beispielsweise ein Draht oder ein Rohr, kontinuierlich durch die Bearbeitungsvorrichtung hindurchgeführt werden und dabei während des Durchlaufs in entsprechender Weise bearbeitet werden. Vorzugsweise wird die Vorschubgeschwindigkeit des Werkstücks so gewählt, dass in Abhängigkeit der Relativbewegung zwischen dem Werkstück und der Erzeugungseinrichtung, insbesondere einer Scannereinrichtung und/oder eines Objektivelements, eine Kompensation der Relativbewegung mit Hilfe der Erzeugungseinrichtung, insbesondere der Scannereinrichtung, vorgenommen wird oder werden kann. Damit lässt sich insbesondere das Ziel einer gleichmäßigen Verteilung der Laserstrahlung auf der Oberfläche des zu bearbeitenden Werkstücks realisieren. In anderer Ausgestaltung ist die Bearbeitungsvorrichtung für eine getaktete Bearbeitung ausgebildet. Eine dynamische Bearbeitung im Sinne der vorliegenden Erfindung ist insbesondere eine Bearbeitung des Werkstücks in kontinuierlicher Bewegung. Ein Vorteil einer solchen Bearbeitung liegt darin, das kontraproduktive Nebenzeiten, wie beispielsweise das Zustellen des Werkstücks für eine Bearbeitung, entfallen können. Diese Nebenzeiten können je nach geforderter Zustellgenauigkeit rasch 50% bis 75% des gesamten Arbeitsschritts ausmachen, wodurch die Produktivität der Bearbeitungsvorrichtung signifikant sinkt. Eine dynamische Bearbeitung ist insbesondere die Bestrahlung eines Werkstücks, während sich dieses in kontinuierlicher Bewegung befindet. Technisch wird dies beispielsweise so umgesetzt, dass ein InkrementGeber elektrische Pulse erzeugt, deren Frequenz die Geschwindigkeit des Werkstücks kodiert. Diese Signale werden "life" (Online) auf die Elektronik der Scanneransteuerung gegeben, die daraus eine permanente "Echtzeit"-Korrektur der Strahlablenkung generiert.

Wenn das Werkstück dynamisch bearbeitet, das heißt insbesondere kontinuierlich, vorzugsweise im Durchlauf, bearbeitet wird, kann beispielsweise vorgesehen sein, dass das Werkstück in seiner Gesamtheit bearbeitet wird. Ein lackierter Draht beispielsweise kann durch die Bearbeitungsvorrichtung hindurchgeführt und über seine gesamte Länge entlackt werden. Ebenso ist es möglich, dass das Werkstück nur partiell bearbeitet wird. En lackierter Draht beispielsweise kann nur partiell entlackt werden. Partiell bedeutet in diesem Fall insbesondere, dass das Werkstück nur in einzelnen Bereichen, und dort vorzugsweise allseitig, bearbeitet wird, während andere Bereiche unbearbeitet bleiben.

In bevorzugter Ausgestaltung weist die Bearbeitungsvorrichtung einen Werkstückeintritt auf, der zum Einführen des Werkstücks in die Bearbeitungszone ausgebildet ist und dient. Zudem weist die Bearbeitungsvorrichtung auch einen Werkstückaustritt auf, der zum Herausführen des Werkstücks aus der Bearbeitungszone ausgebildet ist und dient. Wen die Bearbeitungsvorrichtung zur stationären Bearbeitung von Werkstücken dient, können Werkstückeintritt und Werkstückaustritt beispielsweise zusammenfallen. Wenn die Bearbeitungsvorrichtung zur dynamischen Bearbeitung von Werkstücken ausgebildet ist, sind Werkstückeintritt und Werkstückaustritt bevorzugt separat und getrennt voneinander. Das Werkstück wird über den Werkstückeintritt der Bearbeitungszone zugeführt und über den Werkstückaustritt aus der Bearbeitungszone abgeführt. Beispielsweise kann vorgesehen sein, dass sich der Werkstückeintritt und der Werkstückaustritt jeweils in einem Gehäuse befinden, vorzugsweise an unterschiedlichen Seiten des Gehäuses, wobei das Gehäuse insbesondere die Bearbeitungszone, und vorzugsweise andere Komponenten der Bearbeitungsvorrichtung, beispielsweise die Eistrahleinrichtung mit den Spiegeln, umgibt. Beispielsweise kann das Gehäuse die so genannte Laserkammer umgeben, in der die erzeugte Laserstrahlung auf das Werkstück gerichtet und das Werkstück dadurch bearbeitet wird. Das Gehäuse verfügt somit über einen Eintritt und einen Austritt für das Werkstück. Im Falle eines Drahtes sind dies vorzugsweise lochförmige Öffnungen. Vorzugsweise sind der Werkstückeintritt und der Werkstückaustritt relativ konturgenau an die betreffende Werkstückgeometrie angepasst. Das hat den Vorteil einer besseren Abschirmung gegenüber Laser-Streu-Strahlung. Außerdem können eine Absaugströmung sowie eine mögliche Schutzgasströmung wesentlich exakter kontrolliert werden.

Bevorzugt weist die Bearbeitungsvorrichtung wenigstens eine Antriebseinrichtung zum Hindurchführen des Werkstücks durch die Bearbeitungszone auf. Die Antriebseinrichtung ist insbesondere dann von Vorteil, wenn das Werkstück in der Bearbeitungsvorrichtung dynamisch bearbeitet wird. Über die Antriebseinrichtung wird für das Werkstück insbesondere eine konstante oder variable Vorschubgeschwindigkeit erzeugt, mit der das Werkstück, bevorzugt in einer vorgegebenen Vorschubrichtung, durch die Bearbeitungszone hindurch bewegt wird. Die vorliegende Erfindung ist nicht auf bestimme Ausführungsformen für die Antriebseinrichtung beschränkt. Ebenso ist die vorliegende Erfindung nicht auf bestimmte Orte beschränkt, wo die Antriebseinrichtung angeordnet oder ausgebildet ist. Bevorzugt stellt die Antriebsvorrichtung einen Bestandteil der Bearbeitungsvorrichtung dar. Bevorzugt ist ferner, wenn sich die Antriebseinrichtung außerhalb der Bearbeitungszone, insbesondere außerhalb des Werkstückeintritts und/oder der Werkstückaustritts befindet. Wenn ein wie weiter oben beschriebenes Gehäuse zum Einsatz kommt, befindet sich die Antriebseinrichtung bevorzugt außerhalb des Gehäuses. Die vorliegende Erfindung ist auch nicht auf eine bestimmte Anzahl von Antriebseinrichtungen beschränkt. Die Antriebseinrichtung ist meistens extern angebracht. Beispielsweise kann die Antriebseinrichtung derart ausgebildet sein, dass sie in der Lage ist, das Werkstück durch die Bearbeitungstone hindurchzuziehen. Bei drahtförmigen Werkstücken beziehungsweise Werkstücken mit kleinen Querschnitten wird praktisch immer "ziehend" gefördert. Dadurch wird erreicht, dass das Werkstück "straff" gehalten wird und sich dadurch immer exakt in der vorgesehene Bearbeitungsposition befindet.

Anwendungsbedingt wird häufig gefordert, dass ein, insbesondere dynamisch bearbeitetes Werkstück nicht in seiner Gesamtheit, sondern nur partiell bearbeitet wird. Bei einem lackierten Draht beispielswiese kann gefordert sein, dass eine 360 Grad umlaufende Entlackung nur auf einer bestimmten Länge, beispielsweise von 10mm, erfolgt.

In weiterer bevorzugter Ausgestaltung weisen die einzelnen Spiegel der Einstrahleinrichtung eine definierte Länge auf. Die Spiegel sollten so lang sein, wie sie für die Bearbeitung der Winkel-Teilsegmente bei der geforderten Vorschubgeschwindigkeit benötigt werden. Auf der anderen Seite sollten sie aber auch nicht zu lang sein, da ansonsten - wegen der größeren freien Apertur zum Werkstück hin - die Verschmutzungsgefahr deutlich zunimmt.

In einer bevorzugten Ausgestaltung weist die Bearbeitungsvorrichtung eine Absaugvorrichtung auf. Die Absaugvorrichtung ist derart bereitgestellt, dass sie in der Lage ist, mittels der Laserstrahlen vom zu bearbeitenden Werkstück abgelöste Partikel abzusaugen. Bei der Absaugvorrichtung handelt es sich insbesondere um eine in der Bearbeitungsvorrichtung integrierte Absaugvorrichtung. Die Absaugvorrichtung hat insbesondere die Aufgabe, die Spiegel von Dreck freizuhalten. Die Absaugvorrichtung ist dabei insbesondere in solch einer Weise bereitgestellt, dass damit eine Absaugung vorzugsweise in axialer Richtung des Werkstücks, bei kontinuierlicher oder getakteter Bearbeitung eines rotationssymmetrischen Werkstücks, etwa eines Drahtes oder Rohres, in oder gegen dessen Vorschubrichtung oder auch senkrecht zur Vorschubrichtung, erfolgt oder erfolgen kann. Damit wird insbesondere eine gleichmäßige Überströmung, insbesondere der Spiegel erreicht. In einer bevorzugten Ausführungsform weist die Absaugvorrichtung wenigstens ein integriertes Absaugrohr auf, welches konzentrisch um die Bearbeitungszone herum angeordnet ist und mit seitlichen Aussparungen für die Spiegel beziehungsweise Aperturen für den Eintritt der Laserstrahlen in die Bearbeitungszone versehen ist. Hiermit ist eine Optimierung der Luftführung für die Erfassung der Abtragpartikel sowie die Reinhaltung der Spiegel möglich.

In weiterer bevorzugter Ausgestaltung weist die Bearbeitungsvorrichtung eine Schutzvorrichtung für die Spiegel auf. Beispielsweise handelt es sich bei der Schutzvorrichtung insbesondere um ein vor dem Spiegel platziertes Schutzglas. Die Schutzvorrichtung weist bevorzugt eine Anzahl solcher Schutzgläser auf, wobei die Anzahl der Schutzgläser der Anzahl der Spiegel entspricht, und wobei jedem Spiegel ein Schutzglas zugeordnet ist. Das Schutzglas kann bevorzugt wechselbar, beispielsweise steckbar, vor dem dazugehörigen Spiegel angeordnet sein. In einer anderen Ausführungsform ist die Schutzvorrichtung als Einrichtung zur Erzeugung von Druckluft ausgebildet. In einem solchen Fall ist der Spiegelschutz bevorzugt über eine oder mehrere Druckluftdüsen realisiert. Bevorzugt wird der Spiegel, beziehungsweise die zu schützende Spiegelfläche, oder ein vor dem Spiegel befindliches Schutzglas, dabei von der Druckluft laminar überströmt, vorzugsweise aber nicht notwendigerweise senkrecht zur Vorschubrichtung. In einer bevorzugten Ausführungsform besteht die Schutzvorrichtung aus einer Kombination von einem oder mehreren Schutzgläsern und einer Einrichtung zur Erzeugung von Druckluft.

Die einzelnen Bestandteile der Einstrahlvorrichtung, insbesondere die verschiedenen Spiegel, die Absaugvorrichtung und die Schutzvorrichtung sind bevorzugt innerhalb eines Gehäuses angeordnet. Bei einem solchen Gehäuse kann es sich beispielsweise um ein wie weiter oben beschriebenes Gehäuse handeln, welches die Laserkammer umgibt. Wird ein Werkstück kontinuierlich im Durchlauf bearbeitet, wird dieses bevorzugt durch das Gehäuse hindurchgeführt, wobei die Bearbeitung innerhalb des Gehäuses erfolgt. Die einzelnen Spiegel sind zur vereinfachten Montage bevorzugt an oder in einer dafür vorgesehen Spiegel kassette montiert, so dass die Spiegel insbesondere vormontiert werden können.

Gemäß dem zweiten Aspekt der Erfindung wird ein Verfahren zur Bearbeitung eines Werkstücks mittels Laserstrahlung bereitgestellt, welches die Merkmale des unabhängigen Patentanspruchs 11 aufweist.

Während der Bearbeitung ist das Werkstück in einer Bearbeitungszone einer Bearbeitungsvorrichtung aufgenommen. Im Falle einer dynamischen Bearbeitung wird das Werkstück durch die Bearbeitungszone hindurchgeführt.

Bevorzugt wird das Verfahren unter Verwendung einer Bearbeitungsvorrichtung gemäß dem ersten Erfindungsaspekt durchgeführt, so dass hinsichtlich der Durchführung des Verfahrens und dessen Funktionsweise vollinhaltlich auch auf die vorstehenden Ausführungen zum ersten Erfindungsaspekt vollinhaltlich Bezug genommen und verwiesen wird.

Das Verfahren ist gekennzeichnet durch folgende Schritte. Über wenigstens eine Erzeugungseinrichtung der Bearbeitungsvorrichtung werden zunächst Laserstrahlen erzeugt. Die erzeugten Laserstrahlen werden über wenigstens eine der wenigstens einen Erzeugungseinrichtung zugeordnete Einstrahleinrichtung, welche eine Anzahl von Spiegeln aufweist, wobei die Bearbeitungszone eine definierte Erstreckungsrichtung aufweist, wobei sich die Bearbeitungszone in der Erstreckungsrichtung ausdehnt, wobei die Bearbeitungszone einen Beginn aufweist, und wobei die Spiegel der Einstrahlrichtung in der definierten Erstreckungsrichtung in einem unterschiedlichen Abstand zum Beginn der Bearbeitungszone versetzt zueinander angeordnet sind, aus mehreren unterschiedlichen Einstrahlrichtungen wahlweise oder in einer vorgegebenen Bearbeitungsreihenfolge über die Spiegel in die Bearbeitungszone eingestrahlt und in einer Fokuszone, die mit der Bearbeitungszone korrespondiert, fokussiert. Bevorzugt werden die erzeugten Laserstrahlen nacheinander über unterschiedliche Spiegel in die Bearbeitungszone eingestrahlt. Die Spiegel sind im Strahlweg der Laserstrahlen zwischen dem Austrittspunkt der Laserstrahlen aus der wenigstens einen Erzeugungseinrichtung und dem Fokus der Laserstrahlen angeordnet. Bevorzugt wird in jeder Einstrahlrichtung der Strahlweg der Laserstrahlen zwischen dem Austrittspunkt der Laserstrahlen über jeden der Spiegel zum Fokus der Laserstrahlen gleich lang eingestellt. Die Laserstrahlen treffen auf der Oberfläche eines in der Bearbeitungszone platzierten zu bearbeitenden Werkstücks auf. Die Bearbeitung des Werkstücks erfolgt mittels dieser auf dem Werkstück auftreffenden Laserstrahlen.

Bevorzugt werden die Laserstrahlen in wenigstens einer Erzeugungseinrichtung erzeugt und in einer festgelegten Reihenfolge nacheinander auf die verschiedenen Spiegel gelenkt. Von dort werden die Laserstrahlen in Richtung der Bearbeitungszone reflektiert und treffen dort auf das zu bearbeitende Werkstück auf. Durch die entsprechende Ausgestaltung der Strahlwege, die alle gleich lang sind, ist sichergestellt, dass alle Laserstrahlen auf der Oberfläche des Werkstücks fokussiert sind, was im Zusammenhang mit der Bearbeitungsvorrichtung im Rahmen von deren Funktionsweise weiter oben beschrieben ist, so dass auf die entsprechenden Ausführungen weiter oben Bezug genommen wird. Dort, wo es erforderlich ist, wird ein Laserstrahl über ein geeignetes Weg-Kompensationselement gelenkt, damit alle Strahlwege der Laserstrahlen über die verschiedenen Spiegel gegebenenfalls gleich lang einstellbar beziehungsweise eingestellt sind. Zumindest einzelne Spiegel, vorzugsweise jeder Spiegel wird/werden bevorzugt einzeln eingestellt, beispielsweise hinsichtlich der Position und/oder des Winkels. Jeder Laserstrahl, der über einen der Spiegel in die Bearbeitungszone mit dem zu bearbeitenden Werkstück eingestrahlt wird, wird bevorzugt hinsichtlich seiner Strahlparameter individuell und unabhängig von anderen Laserstrahlen aus anderen Einstrahlrichtungen eingestellt und beeinflusst. Wenn das Werkstück dynamisch bearbeitet wird, beispielsweise im Durchlauf oder getaktet, wird das Werkstück mit einer Vorschubgeschwindigkeit durch die Bearbeitungsvorrichtung,

insbesondere durch die Bearbeitungszone, hindurchgeführt. Vorzugsweise wird die Vorschubgeschwindigkeit des Werkstücks so gewählt, dass in Abhängigkeit der Relativbewegung zwischen dem Werkstück und der Erzeugungseinrichtung, insbesondere einer Scannereinrichtung und/oder eines Objektivelements, eine Kompensation der Relativbewegung mit Hilfe der Erzeugungseinrichtung, insbesondere der Scannereinrichtung, vorgenommen wird oder werden kann.

Mit dem erfindungsgemäßen Verfahren lässt sich insbesondere eine allseitige Bearbeitung des Werkstücks realisieren.

Beispielsweise erfolgt mit dem Verfahren eine stationäre Bearbeitung des in der Bearbeitungsvorrichtung befindlichen Werkstücks. In einem solchen Fall ist das Werkstück, beispielsweise ein Draht, stillstehend. Die von der Erzeugungseinrichtung erzeugten Laserstrahlen werden nacheinander aus unterschiedlichen Einstrahlrichtungen eingestrahlt. Bevorzugt werden die einzelnen Laserstrahlen zyklisch angesteuert, so dass immer nur Laserstrahlen aus einer Einstrahlrichtung gleichzeitig auf das Bauteil einwirken. Nachdem die Bearbeitung aus allen Einstrahlrichtungen vollständig erfolgt ist, wird das Werkstück aus der Bearbeitungszone entfernt, oder aber um die Länge der Bearbeitung nach vorne getaktet. Für die erneute Bearbeitung ist es dann wieder angehalten.

In einer bevorzugten Ausführungsform erfolgt mit dem Verfahren eine dynamische Bearbeitung des in der Bearbeitungsvorrichtung befindlichen Werkstücks. Dabei lässt sich insbesondere eine kontinuierliche Bearbeitung des Werkstücks im Durchlauf realisieren, was auch als "On The Fly"-Bearbeitung bezeichnet wird. Das bedeutet, dass das Werkstück, beispielsweise ein rotationssymmetrisches Werkstück, etwa in Form eines Drahtes oder Rohres, kontinuierlich durch die Bearbeitungsvorrichtung hindurchgeführt wird. Während sich das Werkstück innerhalb der Bearbeitungsvorrichtung befindet, wird das Werkstück mittels der Laserstrahlung bearbeitet. Bevorzugt werden dabei die erzeugten Laserstrahlen von der Erzeugungseinrichtung auf die verschiedenen Spiegel gelenkt und von dort, aus verschiedenen Richtungen, beispielsweise allseitig auf das zu bearbeitende Werkstück eingestrahlt.

Vorzugsweise wird das Werkstück dynamisch bearbeitet, wobei das Werkstück in einer definierten Vorschubrichtung und/oder mit einer, vorzugsweise konstanten oder variablen, Vorschubgeschwindigkeit durch die Bearbeitungszone hindurchgeführt wird.

In einer bevorzugten Ausführungsform erfolgt eine kontinuierliche Bearbeitung des Werkstücks mit folgenden Schritten: Das Werkstück, beispielsweise ein Draht, wird mit gleichbleibender Geschwindigkeit kontinuierlich durch die Bearbeitungsvorrichtung gefördert. Die Laserstrahlen wirken zunächst aus einer ersten Einstrahlrichtung ein und bearbeiten dort, insbesondere auf voller, das heißt auf größtmöglicher Bearbeitungslänge. Nachdem das entsprechende Werkstücksegment mit Laserstrahlen, insbesondere komplett, bearbeitet ist, wird die Bearbeitung auf Laserstrahlen aus einer nächsten, zweiten Einstrahlrichtung umgeschaltet. Die Laserstrahlen wirken aus der zweiten Einstrahlrichtung auf das zu bearbeitende Werkstück ein und die Bestrahlung wird anschließend fortgeführt, bis die komplette Oberfläche, beispielsweise der Außenumfang des Werkstücks aus den unterschiedlichen Einstrahlrichtungen einmal bearbeitet wurde. Bei mehreren, insbesondere vier, Spiegeln bedeutet dies, dass eine entsprechende Bestrahlung noch aus wenigstens einer weiteren, insbesondere einer dritten und einer vierten, Einstrahlrichtung erfolgt. Die Vorschubgeschwindigkeit des Werkstücks wird bevorzugt exakt so eingestellt, dass dieses für einen "kompletten Umlauf", das heißt eine vollständige Laserbearbeitung aus allen Einstrahrichtungen, genau um die, insbesondere eingestellte, Bearbeitungslänge der Erzeugungseinrichtung weiter transportiert wird. Diese Bearbeitung wird auch "On-The-Fly" genannt und erlaubt insbesondere eine vollflächige Bearbeitung ohne zwischenzeitliches Anstoppen des Werkstücks. Hierdurch Entfallen unproduktive Nebenzeiten.

Bei der dynamischen Bearbeitung wird das Werkstück während der Laserbearbeitung kontinuierlich bewegt. Dies bedeutet, dass eine Fläche, die als erstes bearbeitet wird, im Nachfolgenden einen weiteren Weg - in Erstreckungsrichtung, beispielsweise in Vorschubrichtung - zurücklegt, als eine Fläche, die später bearbeitet wird. Dies bedeutet in einer konkreten Ausgestaltung, dass derjenige Spiegel, welcher als erstes für die Bearbeitung eines Winkel-Teilsegmentes des Werkstücks genutzt wird, sich näher am Eintritt des Werkstücks in die Bearbeitungszone, und damit am Werkstückeintritt, befinden muss. Der Spiegel, welcher das zweite Winkel-Teilsegment bearbeitet, ist gegenüber dem ersten Spiegel um einen gewissen Abstand - in Erstreckungsrichtung, beispielsweise in Vorschubrichtung des Werkstücks - versetzt. Dies gilt analog für jeden weiteren Spiegel und zwar exakt in der Reihenfolge, in der die Spiegel für die Bearbeitung von Winkel-Teilsegmenten benutzt werden.

Die Erfindung wird nachfolgend anhand von Ausführungsbeispielen unter Bezugnahme auf die beiliegenden Zeichnungen in größerem Detail beschrieben. Es zeigen
- Figur 1: eine erste Ausführungsform einer Bearbeitungsvorrichtung gemäß der vorliegenden Erfindung;
- Figur 2: eine zweite Ausführungsform einer Bearbeitungsvorrichtung gemäß der vorliegenden Erfindung;
- Figur 3: Konturen verschiedenartig ausgebildete Arbeitsfelder;
- Figur 4: eine perspektivische Ansicht einer Einstrahleinrichtung der erfindungsgemäßen Bearbeitungsvorrichtung;
- Figur 5: die Draufsicht auf die einzelnen Komponenten der Einstrahleinrichtung der erfindungsgemäßen Bearbeitungsvorrichtung;
- Figuren 6 bis 9: verschiedene Strahlwege der Laserstrahlen über verschiedene Spiegel der erfindungsgemäßen Bearbeitungsvorrichtung;
- Figur 10: in einer einzigen Darstellung zusammengefasst die in den Figuren 5 bis 8 separat dargestellten Strahlwege der Laserstrahlen;
- Figur 11: den Ablauf des erfindungsgemäßen Verfahrens bei einer stationären Bearbeitung eines Werkstücks; und
- Figuren 12 bis 19: den Ablauf des erfindungsgemäßen Verfahrens bei einer kontinuierlichen Bearbeitung eines Werkstücks.

In den verschiedenen Figuren ist eine Bearbeitungsvorrichtung 10 dargestellt, mittels derer ein Werkstück, beispielsweise ein rotationssymmetrisches Werkstück, beispielsweise in Form eines Drahtes 100, im Durchlauf, das heißt kontinuierlich mittels Laserstrahlung bearbeitet werden kann. Beispielsweise kann der Draht 100 entlackt werden. Dazu wird der Draht 100 in einer Vorschubrichtung 101 durch die Bearbeitungsvorrichtung 10 hindurchgeführt und innerhalb der Bearbeitungsvorrichtung 10 bearbeitet.

Auch wenn in der folgenden Figurenbeschreibung die Erfindung anhand der Bearbeitung eines Drahtes exemplarisch verdeutlicht wird, so sei an dieser Stelle darauf hingewiesen, dass die Erfindung auch für andere Werkstückformen und Werkstückgeometrien einsetzbar ist. In einer bevorzugten Ausführungsform wird die Erfindung im Zusammenhang mit der Bearbeitung langgestreckter Werkstücke eingesetzt, da hier insbesondere ein kontinuierlicher Durchlauf möglich ist. Langgestreckte Werkstücke haben eine Länge, die um ein Vielfaches größer ist als deren Breite, Dicke, Durchmesser oder Tiefe. Beispiele solch langgestreckter Werkstücke sind rotationssymmetrische Werkstücke, die beispielsweise wie geschildert als Draht oder Rohr vorliegen können.

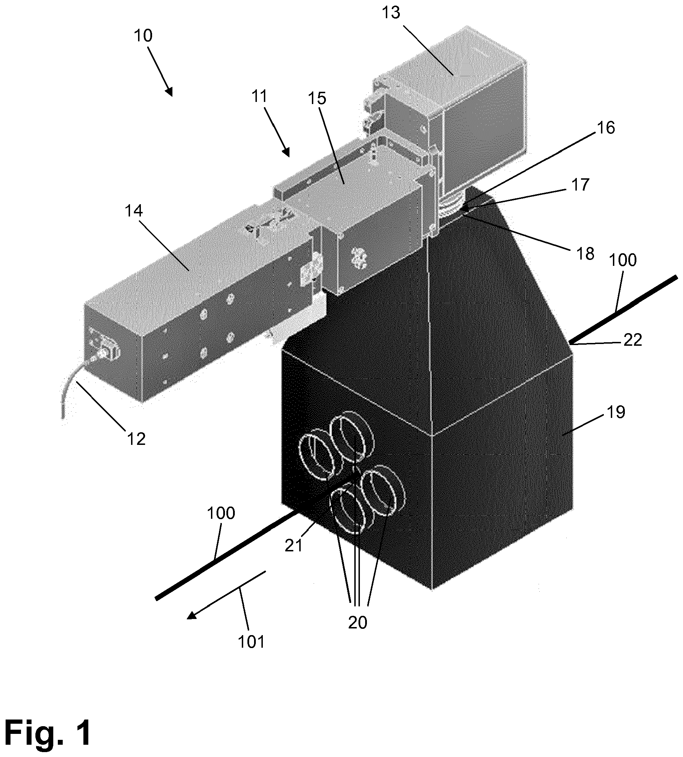

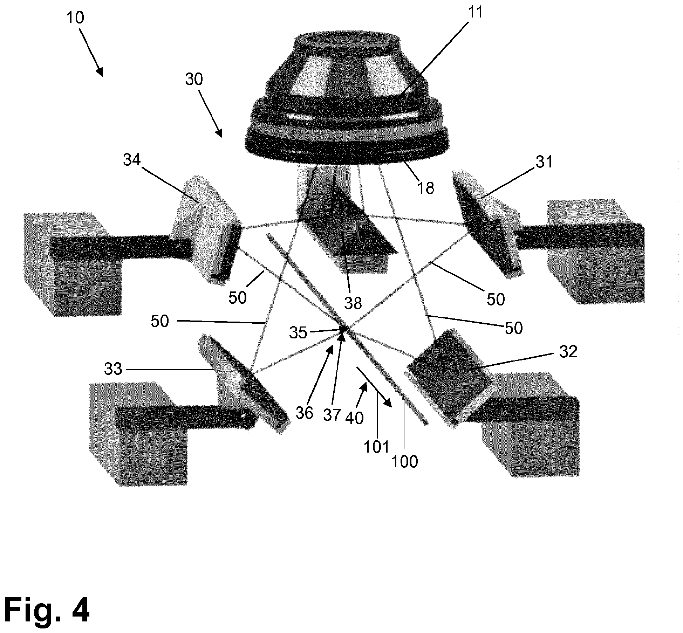

In der Figur 1 ist ein erstes Ausführungsbeispiel einer erfindungsgemäßen Bearbeitungsvorrichtung 10 dargestellt. Die Bearbeitungsvorrichtung 10 weist zunächst eine einzige Erzeugungseinrichtung 11 auf, mittels derer Laserstrahlen für die Bearbeitung des Drahtes 100 erzeugt werden. Die Erzeugungseinrichtung 11 verfügt über eine Laserquelle, mittels derer vorzugsweise eine gepulste Laserstrahlung erzeugt wird. In der Figur 1 ist lediglich ein Teil 12 der Laserquelle in Form eines Lichtleiters dargestellt. Weiterhin verfügt die Erzeugungseinrichtung 11 über eine Scannereinrichtung 13, mittels derer die erzeugten Laserstrahlen abgelenkt werden. Zwischen der Laserquelle 12 und der Scannereinrichtung 13 befindet sich noch ein Modul 15 zur Ablenkung des Laserstrahls in Z-Richtung sowie eine Lasermimik 14 mit weiteren Komponenten. In Strahlrichtung der erzeugten Laserstrahlen der Scannereinrichtung 13 nachgeordnet befindet sich ein Objektivelement 16 mit einer Fokussierlinse. Die Ausgangsseite 17 des Objektivelements 16 bildet den Austrittspunkt 18 der erzeugten Laserstrahlen aus der Erzeugungseinrichtung 11. Die erzeugten Laserstrahlen werden über das Objektivelement 16 in ein Gehäuse 19 der Bearbeitungsvorrichtung 10 gelenkt. Vorzugsweise umgibt das Gehäuse 19 die Laserkammer der Bearbeitungsvorrichtung 10. In dem Gehäuse 19 befindet sich die Einstrahleinrichtung der Bearbeitungsvorrichtung 10, welche im Zusammenhang mit den Figuren 4 bis 10 weiter unten im Detail beschrieben wird. In dem Gehäuse 19 befinden sich verschiedene Anschlüsse 20 für eine Absaugvorrichtung, mittels derer abgelöste Partikel des bearbeiteten Drahtes 100 abgesaugt werden. Der Draht 100 wird in Vorschubrichtung 101 über einen Werkstückeintritt 21 in das Gehäuse 19 eingeführt, durch das Gehäuse 19 der Bearbeitungsvorrichtung 10 hindurchgeführt und nach der Bearbeitung über einen Werkstückaustritt 22 aus dem Gehäuse 19 herausgeführt. Der Vorschub des Werkstücks 100 durch die Bearbeitungszone 36 erfolgt mittels einer Vorschubgeschwindigkeit, bei der es sich um eine konstante oder variable Vorschubgeschwindigkeit handeln kann.

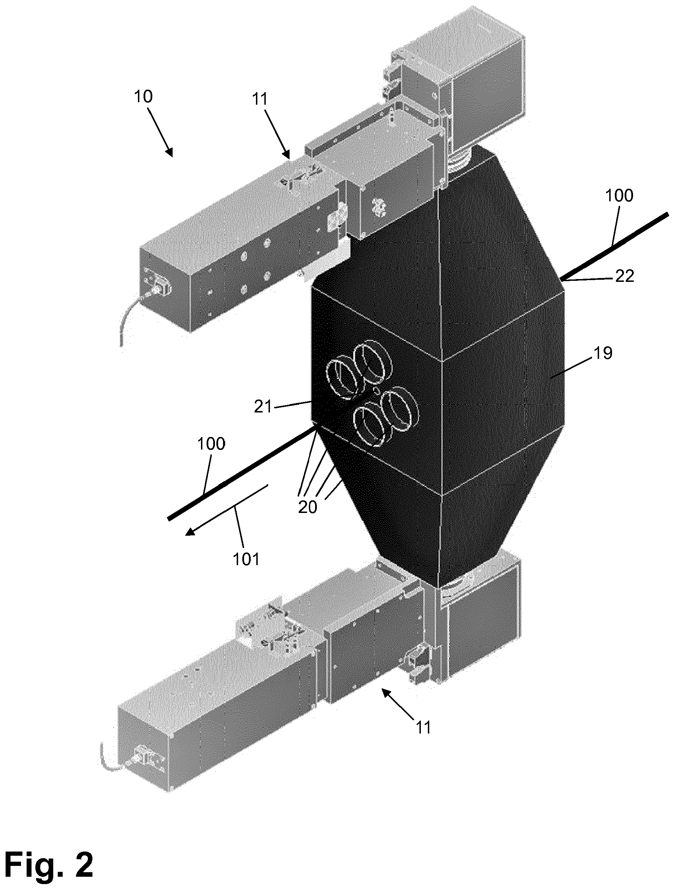

Während in Figur 1 eine Bearbeitungsvorrichtung 10 mit einer einzigen Erzeugungseinrichtung 11 dargestellt ist, weist das in Figur 2 dargestellte Ausführungsbeispiel zwei solcher Erzeugungseinrichtungen 11 auf, die jeweils oberhalb und unterhalb des Gehäuses 19 angeordnet sind. Die Erzeugungseinrichtungen 11 sind identisch wie die Erzeugungseinrichtung 11 in Figur 1 aufgebaut, so dass auf die entsprechenden Ausführungen verwiesen wird.

Während bei dem Ausführungsbeispiel gemäß Figur 1 die von der Erzeugungseinrichtung 11 erzeugten Laserstrahlen nur aus einer Richtung, in diesem Fall von oben, in das Gehäuse 19 der Bearbeitungsvorrichtung 10 eingeleitet werden, werden die erzeugten Laserstrahlen im Ausführungsbeispiel der Figur 2 von zwei gegenüberliegenden Seiten, das heißt von oben und von unten, in das Gehäuse 19 der Bearbeitungsvorrichtung 10 eingeführt. Durch die in Figur 2 dargestellte Ausführungsform kann der Bearbeitungsprozess beschleunigt werden. Sowohl im Ausführungsbeispiel gemäß Figur 1 wie auch in dem gemäß Figur 2 kann eine Einleitung der erzeugten Laserstrahlen auch aus anderen vorteilhaften Richtungen wie beispielsweise seitlich erfolgen.

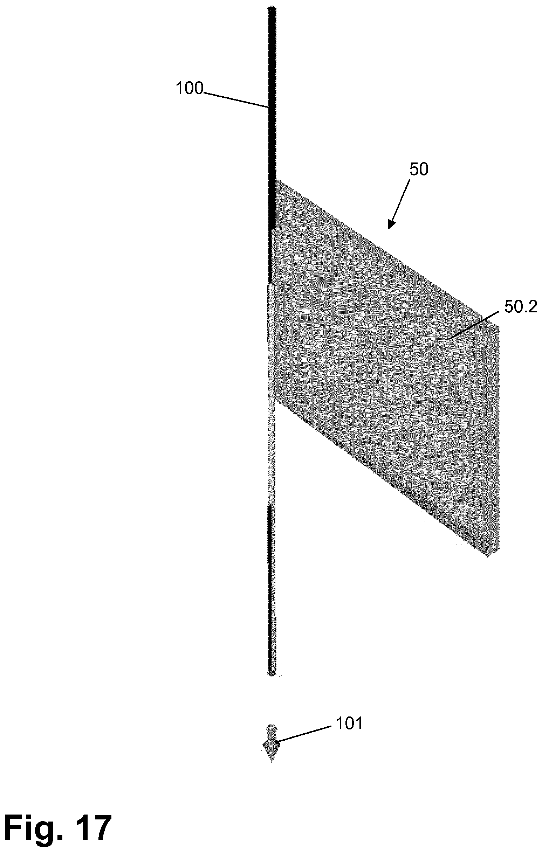

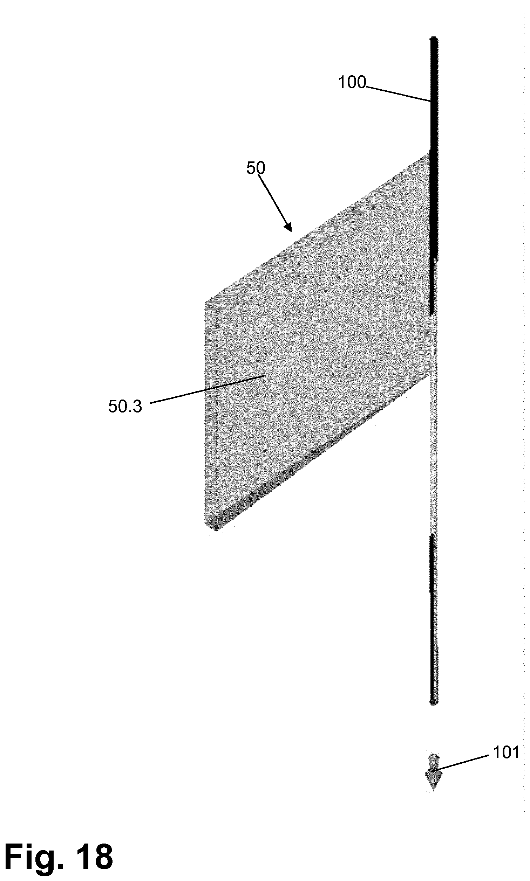

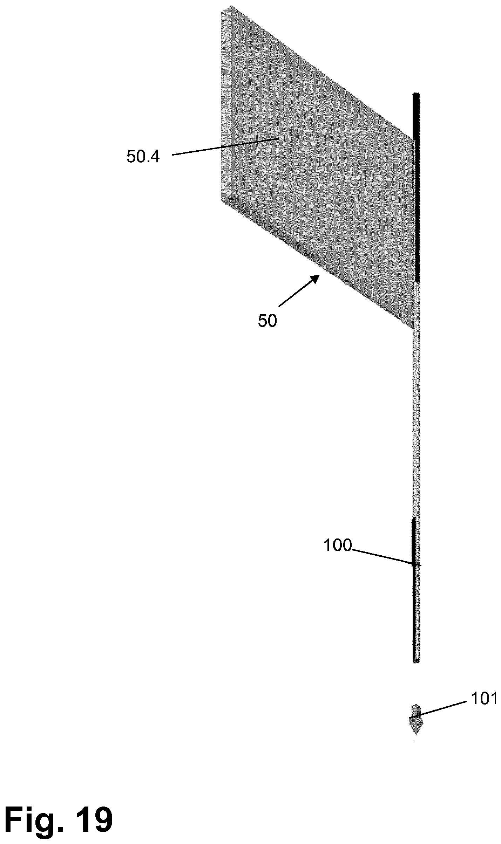

Im Folgenden wird in den Figuren 4 bis 19 eine Bearbeitungsvorrichtung 10 zugrunde gelegt, wie sie in Figur 1 dargestellt ist.

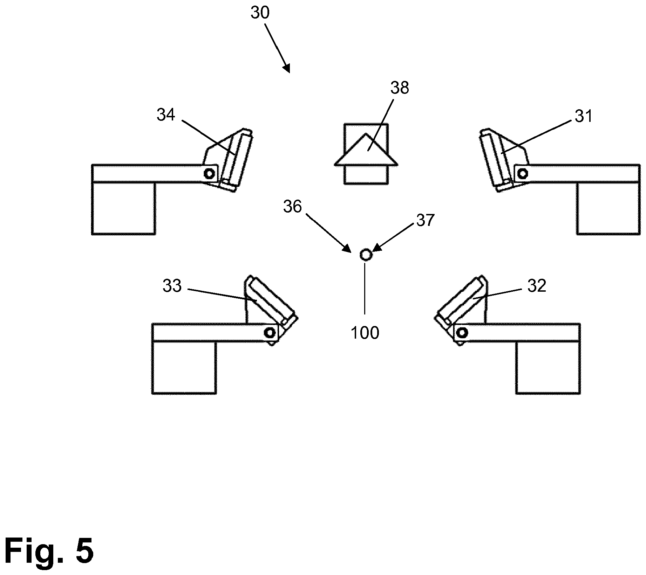

In den Figuren 4 und 5 sind zwei verschiedene Ansichten einer Einstrahleinrichtung 30 dargestellt, die Bestandteil der Bearbeitungsvorrichtung 10 ist, und die innerhalb des in den Figur 1 dargestellten Gehäuses 19 angeordnet ist.

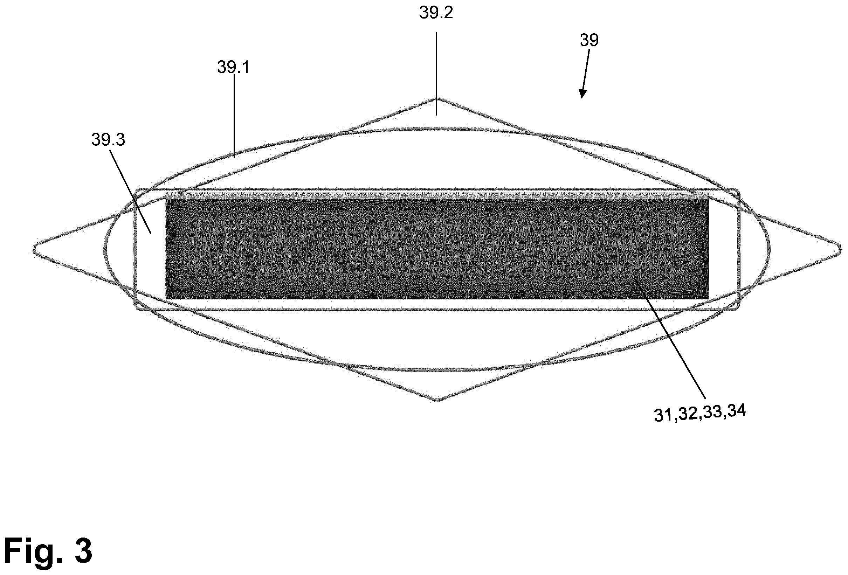

Die Einstrahleinrichtung 30 weist vier Spiegel 31, 32, 33, 34 auf, die als langgestreckte Spiegelelemente ausgebildet sind, und die beweglich innerhalb des Gehäuses angeordnet sind. Die vier Spiegel 31, 32, 33, 34 begrenzen die Bearbeitungszone 36 für den zu bearbeitenden Draht 100. Durch die Erzeugungseinrichtung 11, insbesondere durch die Scannereinrichtung, wird ein Arbeitsfeld 39 erzeugt, welches in Figur 3 dargestellt ist.

Figur 3 repräsentiert eine Draufsicht wahlweise auf einen der Spiegel 31, 32, 33 oder 34, und zwar in Strahlrichtung der Laserstrahlen gesehen aus Richtung von deren Austrittspunkt aus der Erzeugungseinrichtung, In Figur 3 ist das Arbeitsfeld 39 jeweils größer als der entsprechende Spiegel dimensioniert. Dies ist aber nicht zwingend vorgeschrieben. In der Figur 3 sind verschiedene bevorzugte Ausführungsformen von Arbeitsfeldern 39 dargestellt. Bevorzugt kann das Arbeitsfeld 39 als ein elliptisches Arbeitsfeld 39.1, oder als ein rautenförmiges Arbeitsfeld 39.2, oder als ein rechteckiges Arbeitsfeld 39.3 ausgebildet sein. Bei einer "rautenförmigen" Bearbeitung kann die mögliche Bearbeitungslänge des Lasers mit konventionellen Scannereinrichtungen um etwa 40 % gesteigert werden. Hierzu ist es notwendig die Steuerung der Scannereinrichtung so anzupassen und zu synchronisieren, dass die Ablenkung der Laserstrahlen in Richtung der Diagonalen der Scannereinrichtung verläuft.

Der Draht 100 wird in Vorschubrichtung 101 durch die Bearbeitungsvorrichtung10 hindurchbewegt. Die von der Erzeugungseinrichtung 11 über den Austrittspunkt 18 austretenden Laserstrahlen 50 werden nacheinander in einer vorgegebenen Bearbeitungsreihenfolge über die Spiegel 31, 32, 33, 34 in Richtung der Bearbeitungszone 36 gelenkt und in einer Fokuszone 37, die mit der Bearbeitungszone 36 zusammenfällt, fokussiert. Der Fokus 35 der einzelnen Laserstrahlen 50 befindet sich in der Fokuszone 37, die abhängig von der jeweiligen Bauteilgeometrie wahlweise punktförmig, linienförmig, ringförmig oder zylinderförmig oder auch anderweitig vorteilhaft ausgebildet ist. Bevorzugt bei der vorliegenden Erfindung ist es, wenn die Strahlwege der verschiedenen Laserstrahlen 50 aus den verschiedenen Einstrahlrichtungen von dem Austrittspunkt 18 der Erzeugungseinrichtung 11 über die einzelnen Spiegel 31, 32, 33, 34 zu dem jeweiligen Fokus 35 der Laserstrahlen 50 jeweils gleich lang sind. Aus diesem Grund ist ein dreieckiges Weg-Kompensationselement 38 in dem Gehäuse der Bearbeitungsvorrichtung 10 angeordnet. Das Weg-Kompensationselement 38 liegt auf der Mittelachse des Arbeitsfeldes.

Wenn unterschiedlich dimensionierte Werkstücke, beispielsweise Drähte 100 mit unterschiedlichen Durchmessern oder Rohre mit unterschiedlichen Durchmessern, nacheinander mit der Bearbeitungsvorrichtung bearbeitet werden sollen, ist dies mittels der erfindungsgemäßen Bearbeitungsvorrichtung 10 problemlos und einfach möglich. Insbesondere mittels des in Figur 1 dargestellten Moduls 15, durch das die Laserstrahlen in Z-Richtung das heißt der Fokuslänge abgelenkt werden, kann realisiert werden, dass die Strahlwege der Laserstrahlen 50 aus allen verschiedenen Einstrahlrichtungen von dem Austrittspunkt 18 der Erzeugungseinrichtung 11 über die einzelnen Spiegel 31, 32, 33, 34 zu dem jeweiligen Fokus 35 der Laserstrahlen 50 einheitlich und simultan eingestellt werden.

Die Bearbeitungszone 36 dehnt sich in einer Erstreckungsrichtung 40 aus, die der Vorschubrichtung 101 des Drahts 100 entspricht. Erfindungsgemäß ist realisiert, dass die einzelnen Spiegel 31, 32, 33, 34 in der Erstreckungsrichtung 40 versetzt zueinander angeordnet sind. Bei der dynamischen Bearbeitung wird das Werkstück 100 während der Laserbearbeitung kontinuierlich bewegt. Dies bedeutet, dass eine Fläche, die als erstes bearbeitet wird, im Nachfolgenden einen weiteren Weg in Vorschubrichtung 101 zurücklegt, als eine Fläche, die später bearbeitet wird. Dies bedeutet in einer konkreten Ausgestaltung, dass derjenige Spiegel 31, welcher als erstes für die Bearbeitung eines Winkel-Teilsegmentes des Werkstücks 100 genutzt wird, sich näher am Eintritt des Werkstücks 100 in die Bearbeitungszone, und damit am Werkstückeintritt, befinden muss. Der Spiegel 32, welcher das zweite Winkel-Teilsegment bearbeitet, ist gegenüber dem ersten Spiegel 31 um einen gewissen Abstand in Vorschubrichtung versetzt. Dies gilt analog für jeden weiteren Spiegel 33 und 34 und zwar exakt in der Reihenfolge, in der die Spiegel für die Bearbeitung von Winkel-Teilsegmenten benutzt werden.

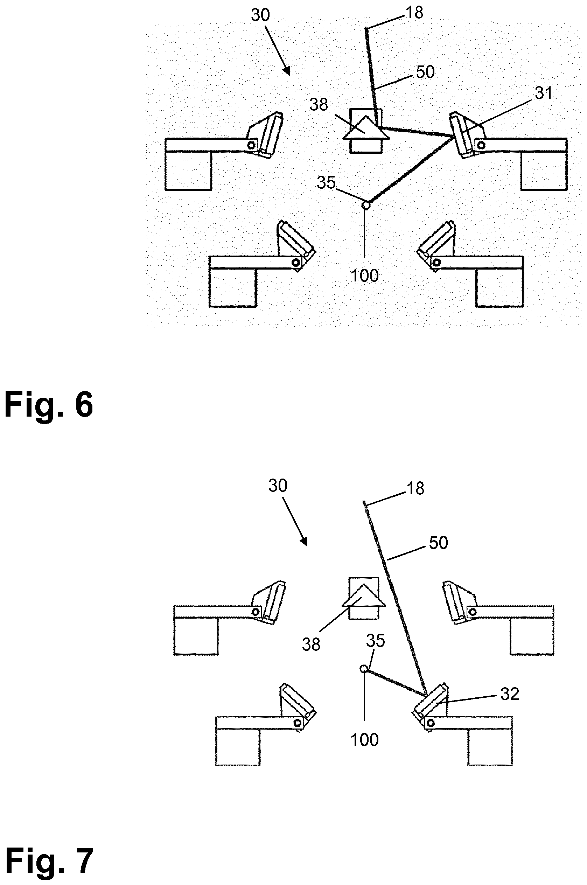

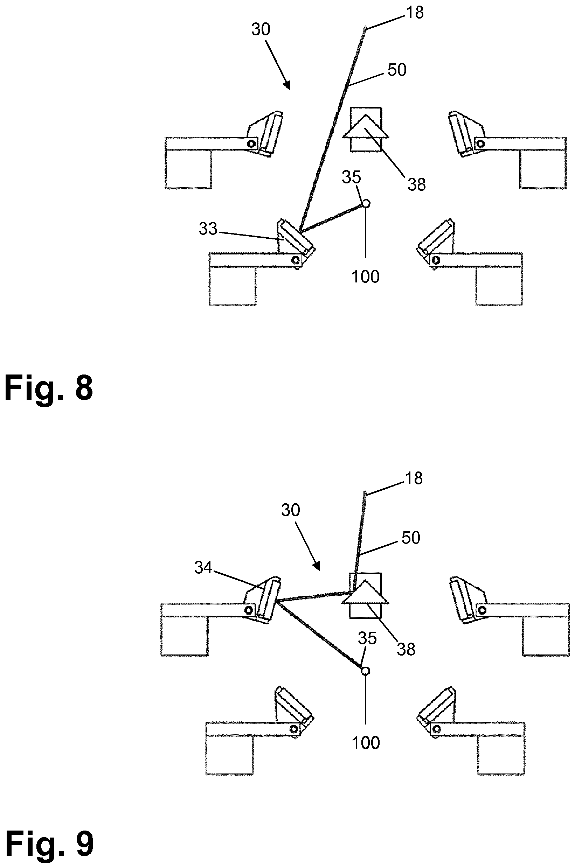

Anhand der Figuren 6 bis 9 wird nun der Ablauf des Verfahrens zur Bearbeitung des Drahtes 100 anhand eines bevorzugten Ausführungsbeispiels beschrieben. Dabei wird der Draht 100, der bearbeitet werden soll, von verschiedenen Seiten, vorzugsweise allseitig, mit Laserstrahlen 50 bestrahlt. Bei der Bearbeitung des Drahtes 100 werden die Laserstrahlen 50 aus verschiedenen Einstrahlrichtungen in einer vorgegebenen Reihenfolge auf die Spiegel 31, 32, 33, 34 gelenkt. Bei diesem Ausführungsbeispiel ist eine Reihenfolge gewählt, bei der die Laserstrahlen 50 zunächst auf den Spiegel 31 gelenkt werden (Figur 6), danach auf den Spiegel 32 (Figur 7), anschließend auf den Spiegel 33 (Figur 8) und schließlich auf den Spiegel 34 (Figur 9). Dadurch wird eine Optimierung der nutzbaren Bearbeitungslänge in Vorschubrichtung 101 des Drahtes 100 bei dem gewählten Arbeitsfeld erreicht. Genauso realisiert werden kann natürlich auch eine spiegelverkehrte Spiegelreihenfolge: 34 - 33 - 32 -31.

In Figur 6 werden die erzeugten Laserstrahlen 50 vom Austrittspunkt 18 der Erzeugungseinrichtung über den ersten Spiegel 31, in Vorschubrichtung 101 des Drahtes 100 gesehen, wie dies in Figur 4 dargestellt ist, oben rechts in die Bearbeitungszone, in der sich der zu bearbeitende Draht 100 befindet, gelenkt. Die Laserstrahlen 50 sind in der Fokuszone fokussiert, das heißt, der Fokus 35 der Laserstrahlen 50 liegt auf der Oberfläche des zu bearbeitenden Drahtes 100.

In Figur 7 werden die erzeugten Laserstrahlen 50 vom Austrittspunkt 18 der Erzeugungseinrichtung über den zweiten Spiegel 32, in Vorschubrichtung 101 des Drahtes 100 gesehen, wie dies in Figur 4 dargestellt ist, unten rechts in die Bearbeitungszone gelenkt und in entsprechender Weise auf der Oberfläche des Drahtes 100 fokussiert.

Damit die Strahlwege der beiden Laserstrahlen 50 in beiden Fällen gleich lang sind, werden die Laserstrahlen, die über den ersten Spiegel 31 gelenkt werden, wie dies in Figur 6 dargestellt ist, zusätzlich über das Weg-Kompensationselement 38 gelenkt.

Der in Figur 6 dargestellte Strahlweg der Laserstrahlen 50 verläuft somit vom Austrittspunkt 18 der Erzeugungseinrichtung zunächst auf das Weg-Kompensationselement 38, wo die Laserstrahlen 50 von einer Seitenfläche des Weg-Kompensationselements 38 auf den Spiegel 31 gelenkt und von dort zum zu bearbeitenden Draht 100 reflektiert werden. Bei Figur 7 werden die Laserstrahlen 50 direkt zu dem zweiten Spiegel 32 gelenkt und von dort auf den zu bearbeitenden Draht 100 reflektiert. Wie man erkennt, werden die Laserstrahlen 50 über die Spiegel 31, 32 in verschiedenen Einstrahlrichtungen auf den Draht 100 eingestrahlt, so dass der Draht 100 in verschiedenen Bereichen bearbeitet wird.

In ähnlicher Weise erfolgt die Einstrahlung der Laserstrahlen 50 auf den Draht 100 über die Spiegel 33 und 34. Figur 8 zeigt den Strahlverlauf der Laserstrahlen 50 von dem Austrittspunkt 18 auf den Spiegel 33, in Vorschubrichtung 101 des Drahtes 100 gesehen, wie dies in Figur 4 dargestellt ist, unten links, von wo die Laserstrahlen 50 direkt auf den Draht 100 reflektiert werden. In Figur 9 ist die Situation dargestellt, in der die Laserstrahlen 50 von dem Austrittspunkt 18, wiederum über das Weg-Kompensationselement 38, zu dem vierten Spiegel 34, in Vorschubrichtung 101 des Drahtes 100 gesehen, wie dies in Figur 4 dargestellt ist, oben links gelenkt und von dort auf den zu bearbeitenden Draht 100 reflektiert werden.

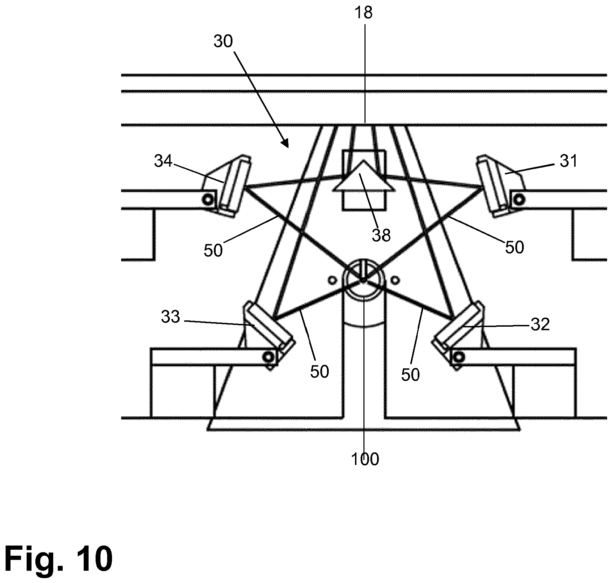

Wie insbesondere der Figur 10 zu entnehmen ist, die alle Strahlwege der Laserstrahlen 50 über die verschiedenen Spiegel 31, 32, 33, 34 gemeinsam zeigt, sind die Strahlwege der Laserstrahlen 50 über die oberen Spiegel 31, 34, wegen der Verwendung des Weg-Kompensationselements 38, gleich lang wie die Strahlwege der Laserstrahlen 50 über die unteren Spiegel 32, 33.

In den Figuren 6 bis 9 ist eine Ausführungsform einer bevorzugten Bearbeitungsreihenfolge über die Spiegel 31, 32, 33, 34 dargestellt. Selbstverständlich können in anderer Ausgestaltung auch andere Bearbeitungsreihenfolgen realisiert sein oder werden. Denkbar ist beispielsweise eine Bearbeitung in der Spiegelreihenfolge 32 - 31 - 34 - 33. Zwischen den einzelnen Spiegeln existieren dann die kleinstmöglichen Sprünge. Der einzig große Rücksprung wäre dann von Spiegel 33 auf Spiegel 32. Auch hier kann wie auch im schon vorgenannten Beispiel eine spiegelverkehrte Bearbeitungsreihenfolge realisiert werden.

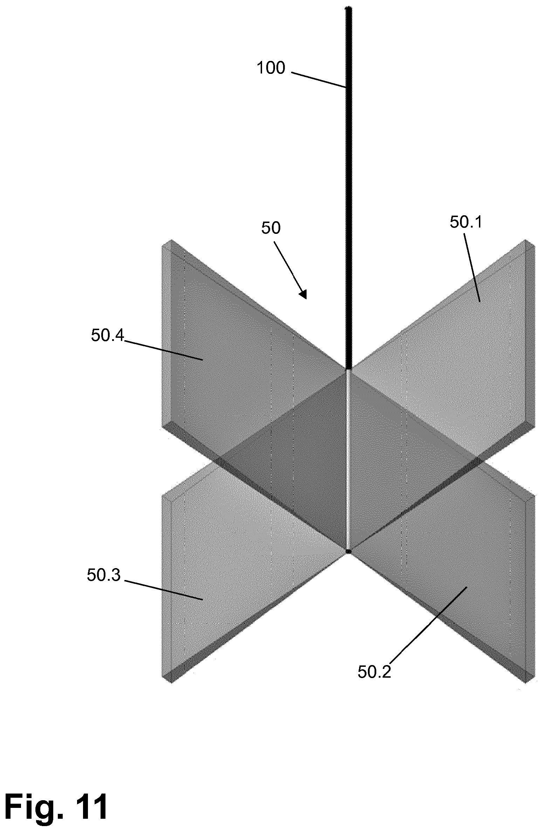

In Figur 11 ist der Ablauf des erfindungsgemäßen Verfahrens dargestellt, bei dem eine stationäre Bearbeitung des in der Bearbeitungsvorrichtung befindlichen Drahtes 100 erfolgt. Dabei wird eine Spiegelkonfiguration herangezogen, wie sie in den vorangegangenen Figuren dargestellt ist. Bei der stationären Bearbeitung ist der Draht 100 während der Bearbeitung stillstehend. Die von der Erzeugungseinrichtung erzeugten Laserstrahlen 50 werden nacheinander aus unterschiedlichen Einstrahlrichtungen auf den zu bearbeitenden Draht 100 gelenkt. Zunächst werden Laserstrahlen 50.1 über den Spiegel 31 (nicht dargestellt) auf die Oberfläche des Drahtes 100 gestrahlt. Danach werden Laserstrahlen 50.2 über den Spiegel 32 (nicht dargestellt) auf die Oberfläche des Drahtes 100 gelenkt. Anschließend werden Laserstrahlen 50.3 über den Spiegel 33 (nicht dargestellt) auf die Oberfläche des Drahtes 100 gestrahlt. Schließlich werden Laserstrahlen 50.4 über den Spiegel 34 (nicht dargestellt) auf die Oberfläche des Drahtes 100 gelenkt In der vereinfachten Darstellung der Figur 11 werden die Laserstrahlen gleichzeitig dargestellt. In der Realität werden die einzelnen Laserstrahlen bevorzugt zyklisch angesteuert, so dass immer nur Laserstrahlen aus einer Einstrahlrichtung gleichzeitig auf den Draht 100 einwirken. Nachdem die Bearbeitung aus allen Einstrahlrichtungen vollständig erfolgt ist, wird der Draht 100 aus der Bearbeitungszone entfernt, oder aber um die Länge der Bearbeitung nach vorne getaktet. Für die erneute Bearbeitung wird er dann wieder angehalten.

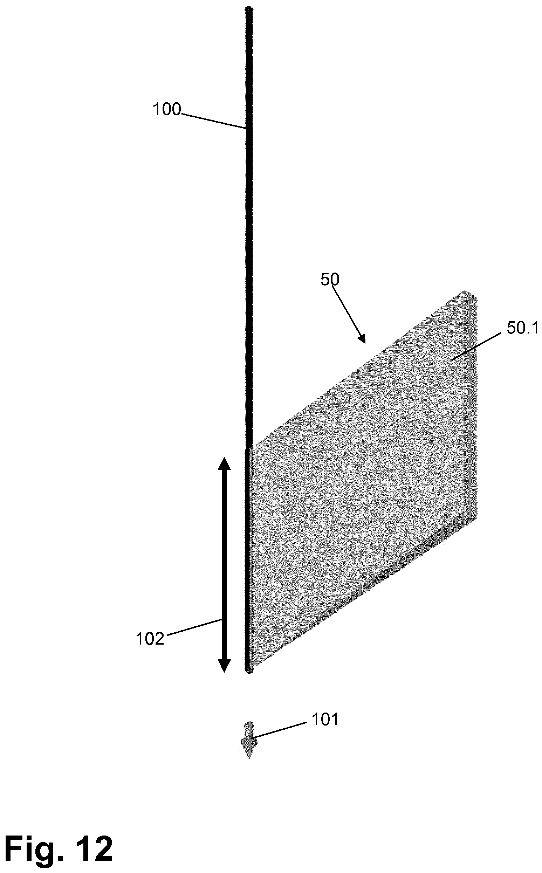

In den Figuren 12 bis 19 der Ablauf des erfindungsgemäßen Verfahrens dargestellt, bei dem eine kontinuierliche Bearbeitung des in der Bearbeitungsvorrichtung befindlichen Drahtes 100 erfolgt. Wiederum wird eine Spiegelkonfiguration herangezogen, wie sie in den vorangegangenen Figuren dargestellt ist Bei dieser Verfahrensausgestaltung lässt sich insbesondere eine kontinuierliche Bearbeitung des Werkstücks im Durchlauf realisieren, was auch als "On The Fly"-Bearbeitung bezeichnet wird. Das bedeutet, dass der Draht 100 in Vorschubrichtung 101 kontinuierlich durch die Bearbeitungsvorrichtung hindurchgeführt wird. Während sich der Draht 100 innerhalb der Bearbeitungsvorrichtung befindet, wird der Draht 100 mittels der Laserstrahlung bearbeitet. Bevorzugt werden dabei die erzeugten Laserstrahlen von der Erzeugungseinrichtung auf die verschiedenen Spiegel gelenkt und von dort, aus verschiedenen Richtungen, beispielsweise allseitig auf den zu bearbeitenden Draht 100 eingestrahlt.

Bei dieser Verfahrensvariante erfolgt die kontinuierliche Bearbeitung des Drahtes 100 mit folgenden Schritten:
Der Draht 100 wird mit gleichbleibender Geschwindigkeit in Vorschubrichtung 101 kontinuierlich durch die Bearbeitungsvorrichtung gefördert.

Die erzeugten Laserstrahlen 50 wirken zunächst aus einer ersten Einstrahlrichtung in Form von Laserstrahlen 50.1 über den Spiegel 31 (nicht dargestellt) auf den Draht 100 ein und bearbeiten dort auf voller, das heißt auf größtmöglicher Bearbeitungslänge. Dies ist in Figur 12 dargestellt.

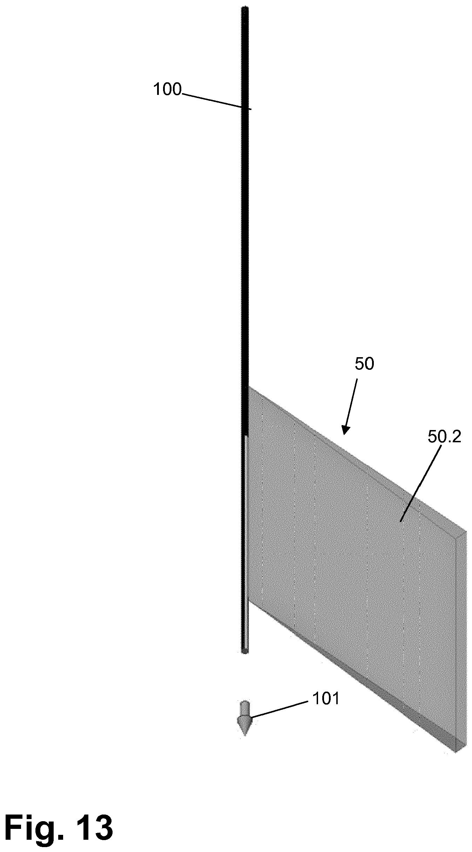

Nachdem das entsprechende Drahtsegment mit Laserstrahlen komplett bearbeitet ist, wird die Bearbeitung auf Laserstrahlen 50.2 aus einer nächsten, zweiten Einstrahlrichtung umgeschaltet, wobei die Laserstrahlen in diesem Fall über den Spiegel 32 (nicht dargestellt) eingestrahlt wurden. Dies ist in Figur 13 dargestellt. Die Laserstrahlen wirken aus der zweiten Einstrahölrichtung auf den zu bearbeitenden Draht 100 ein

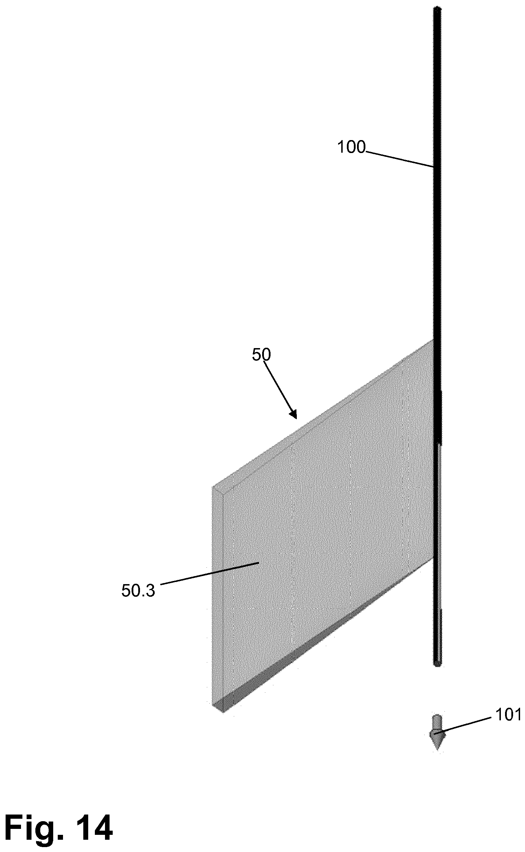

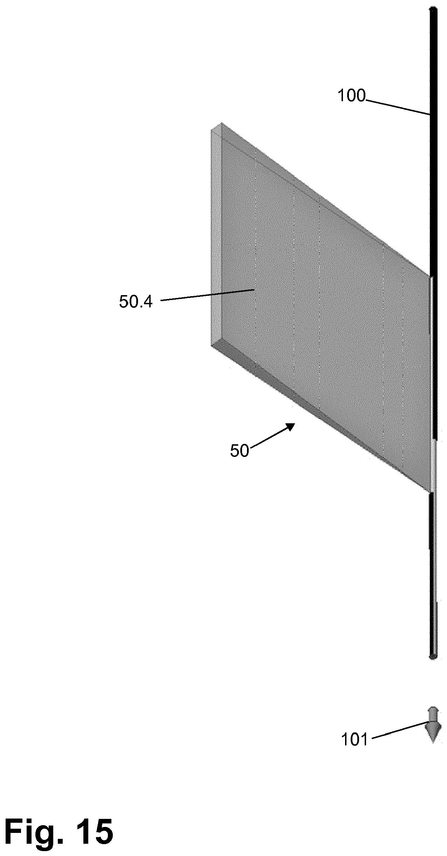

Die Bestrahlung wird anschließend fortgeführt, bis die komplette Oberfläche, beispielsweise der Außenumfang des Drahts 100, aus den unterschiedlichen Einstrahlrichtungen einmal komplett rundherum bearbeitet wurde. Bei vier Spiegeln bedeutet dies, dass eine entsprechende Bestrahlung noch aus einer dritten Einstrahlrichtung erfolgt, bei der Laserstrahlen 50.3 über den Spiegel 33 (nicht dargestellt) eingestrahlt werden (Figur 14), sowie aus einer vierten Einstrahlrichtung, bei der die Laserstrahlen 50.4 über den Spiegel 34 (nicht dargestellt) eingestrahlt werden (Figur 15).

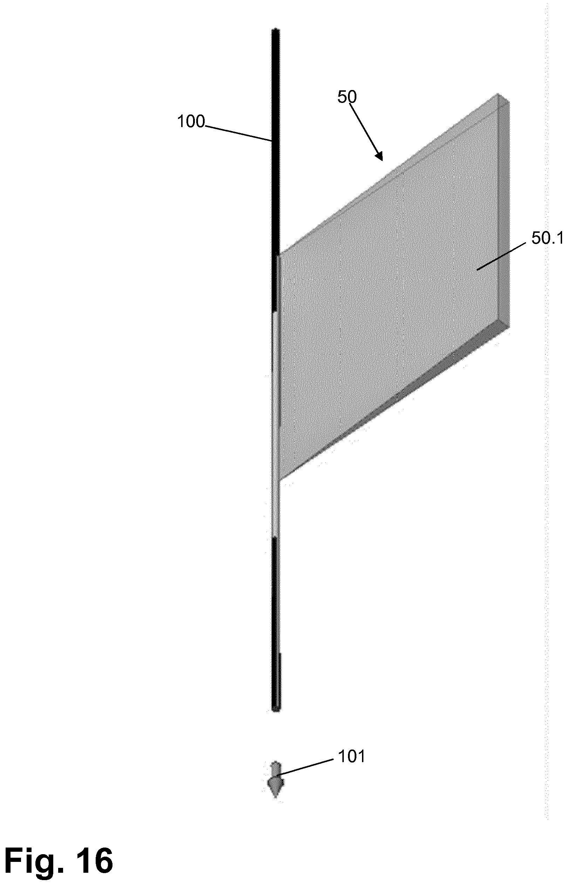

Anschließend beginnt der Umlauf von neuem. In den Figuren 16 bis 19 ist in Anlehnung an die Figuren 12 bis 15 exemplarisch ein zweiter Umlauf dargestellt.

In den Figuren 12 bis 19 ist zu Veranschaulichungszwecken des Verfahrens dargestellt, dass die Laserstrahlen entlang des Drahtes 100 wandern und dass der Draht 100 stationär verbleibt. In der Realität ist es jedoch so, dass sich der Draht 100 mit einer Vorschubgeschwindigkeit in Vorschubrichtung 101 bewegt, und dass die Laserstrahlen während eines Umlaufs stets an gleicher Position auf den Draht 100 auftreffen und insoweit selbst nicht wandern. Die Positionierung der Laserstrahlen über die Spiegel auf der Oberfläche des Drahtes 100 entspricht somit der Positionierung, wie sie in Figur 11 im Hinblick auf die stationäre Bearbeitung dargestellt ist.

Die Vorschubgeschwindigkeit des Drahtes 100 wird bevorzugt exakt so eingestellt, dass dieser für einen "kompletten Umlauf', das heißt eine vollständige Laserbearbeitung aus allen Einstrahrichtungen, genau um die, insbesondere eingestellte, Bearbeitungslänge der Erzeugungseinrichtung weiter transportiert wird. Diese Bearbeitung wird auch "On-The-Fly" genannt und erlaubt eine vollflächige Bearbeitung ohne zwischenzeitliches Anstoppen des Werkstücks. Hierdurch Entfallen unproduktive Nebenzeiten.

Das erfindungsgemäße Verfahren zeichnet sich unter Bezugnahme auf die verschiedenen Figuren dadurch aus, dass über die Erzeugungseinrichtung 11 der Bearbeitungsvorrichtung 10 zunächst Laserstrahlen 50 beziehungsweise 50.1, 50.2, 50.3, 50.4 erzeugt werden. Die erzeugten Laserstrahlen werden über die Spiegel 31, 32, 33, 34 aus mehreren unterschiedlichen Einstrahlrichtungen wahlweise oder in einer vorgegebenen Bearbeitungsreihenfolge über die Spiegel 31, 32, 33, 34 in die Bearbeitungszone 36 eingestrahlt und in einer insbesondere punktförmigen, linienförmigen, ringförmigen oder zylinderförmigen oder anderweitig vorteilhaften Fokuszone 37, die mit der Bearbeitungszone 36 korrespondiert, fokussiert. Dabei liegt der Fokus 35 der einzelnen Laserstrahlen 50 jeweils in der Fokuszone 37. Bevorzugt werden die erzeugten Laserstrahlen 50 nacheinander über unterschiedliche Spiegel 31, 32, 33, 34 in die Bearbeitungszone 36 eingestrahlt. Die Spiegel 31, 32, 33, 34 sind im Strahlweg der Laserstrahlen 50 zwischen dem Austrittspunkt 18 der Laserstrahlen aus der wenigstens einen Erzeugungseinrichtung 11 und der Fokuszone 37, beziehungsweise dem Fokus 35 der Laserstrahlen 50, angeordnet, In jeder Einstrahlrichtung wird der Strahlweg der Laserstrahlen 50 zwischen dem Austrittspunkt 18 der Laserstrahlen über jeden der Spiegel 31, 32, 33, 34 zum Fokus 35 der Laserstrahlen 50 bevorzugt gleich lang eingestellt.

Die Laserstrahlen 50 werden in einer festgelegten Reihenfolge nacheinander auf die verschiedenen Spiegel 31, 32, 33, 34 gelenkt, wobei die Reihenfolge variieren kann. Von dort werden die Laserstrahlen 50 in Richtung der Bearbeitungszone 36 reflektiert und treffen dort auf das zu bearbeitende Werkstück, beispielsweise den zu bearbeitenden Draht 100, auf. Durch die entsprechende Ausgestaltung der Strahlwege, die vorzugsweise alle gleich lang sind, ist sichergestellt, dass alle Laserstrahlen 50 auf der Oberfläche des Werkstücks, beispielsweise auf der Oberfläche des Drahtes 100, fokussiert sind. Dort, wo es erforderlich ist, werden die Laserstrahlen 50 über das Weg-Kompensationselement 38 gelenkt, damit alle Strahlwege der Laserstrahlen 50 über die verschiedenen Spiegel 31, 32, 33, 34 gleich lang sind. Die einzelnen Spiegel 31, 32, 33, 34 können individuell und unabhängig voneinander einzeln eingestellt werden, insbesondere hinsichtlich ihres Winkels und ihrer Position. Ebenso können die über die einzelnen Spiegel 31, 32, 33, 34 in den verschiedenen Einstrahlrichtungen verlaufenden Laserstrahlen 50.1, 50.2, 50.3, 50.4 individuell und unabhängig von anderen Laserstrahlen eingestellt werden, insbesondere hinsichtlich deren Strahlparametern.

Mit dem erfindungsgemäßen Verfahren lässt sich insbesondere eine allseitige Bearbeitung des Werkstücks, beispielsweise des Drahtes 100, realisieren. Dabei lässt sich insbesondere eine kontinuierliche Bearbeitung des Werkstücks, beispielsweise des Drahtes 100, im Durchlauf realisieren, wobei das Werkstück, beispielsweise der der Draht 100, kontinuierlich durch die Bearbeitungsvorrichtung 10 hindurchgeführt wird. Ebenso ist eine getaktete Bearbeitung realisierbar. Während sich das Werkstück, beispielsweise der Draht 100, innerhalb der Bearbeitungsvorrichtung 10 befindet, wird das Werkstück, beispielsweise der Draht 100, mittels der Laserstrahlung bearbeitet, indem die erzeugten Laserstrahlen 50.1, 50.2, 50.3, 50.4 von der Erzeugungseinrichtung 11 nacheinander auf die verschiedenen Spiegel 31, 32, 33, 34 gelenkt und von dort, aus verschiedenen Richtungen, beispielsweise allseitig auf das zu bearbeitende Werkstück, beispielsweise auf den zu bearbeitenden Draht 100, eingestrahlt werden.

### Bezugszeichenliste

- 10: Bearbeitungsvorrichtung
- 11: Erzeugungseinrichtung
- 12: Teil einer Laserquelle
- 13: Scannereinrichtung
- 14: Lasermimik
- 15: Modul zur Ablenkung des Laserstrahls in Z-Richtung
- 16: Objektivelement
- 17: Ausgangsseite des Objektivelements
- 18: Austrittspunkt
- 19: Gehäuse
- 20: Anschluss für Absaugvorrichtung
- 21: Werkstückeintritt
- 22: Werkstückaustritt

- 30: Einstrahleinrichtung
- 31: Spiegel
- 32: Spiegel
- 33: Spiegel
- 34: Spiegel
- 35: Fokus der Laserstrahlen
- 36: Bearbeitungszone
- 37: Fokussierzone
- 38: Weg-Kompensationselement
- 39: Arbeitsfeld
- 39.1: Elliptisches Arbeitsfeld
- 39.2: Rautenförmiges Arbeitsfeld
- 39.3: Rechteckiges Arbeitsfeld
- 40: Erstreckungsrichtung der Bearbeitungszone

- 50: Laserstrahlen
- 50.1: Laserstrahlen
- 50.2: Laserstrahlen
- 50.3: Laserstrahlen
- 50.4: Laserstrahlen
- 100: Draht
- 101: Vorschubrichtung
- 102: Bearbeitungslänge

## Patentansprüche

1. Bearbeitungsvorrichtung (10) für die Bearbeitung eines Werkstücks (100) mittels Laserstrahlung, aufweisend wenigstens eine Erzeugungseinrichtung (11) zum Erzeugen von Laserstrahlen (50), eine Bearbeitungszone (36), die zur Aufnahme des zu bearbeitenden Werkstücks (100) ausgebildet ist, und eine der wenigstens einen Erzeugungseinrichtung (11) zugeordnete Einstrahleinrichtung (30) zum Einstrahlen der erzeugten Laserstrahlen (50) aus mehreren unterschiedlichen Einstrahlrichtungen in die Bearbeitungszone (36), wobei die Einstrahleinrichtung (30) bereitgestellt ist, dass der Fokus (35) der aus den unterschiedlichen Einstrahlrichtungen eingestrahlten Laserstrahlen (50) in einer Fokuszone (37) liegt, welche mit der Bearbeitungszone (36) korrespondiert, wobei die Einstrahleinrichtung (30) eine Anzahl von Spiegeln (31, 32, 33, 34) aufweist, welche zur Einstrahlung der Laserstrahlen (50) in den unterschiedlichen Einstrahlrichtungen bereitgestellt sind, wobei die Spiegel (31, 32, 33, 34) im Strahlweg der Laserstrahlen (50) zwischen einem Austrittspunkt (18) der Laserstrahlen (50) aus der wenigstes einen Erzeugungseinrichtung (11) und dem Fokus (35) der Laserstrahlen (50) angeordnet sind, wobei die wenigstens eine Erzeugungseinrichtung (11) ausgebildet ist, um die erzeugten Laserstrahlen (50) wahlweise oder in einer vorgegebenen Bearbeitungsreigenfolge über die Spiegel (31, 32, 33, 34) in die Bearbeitungszone (36) einzustrahlen, **dadurch gekennzeichnet, dass** die Bearbeitungszone (36) eine definierte Erstreckungsrichtung (40) aufweist, dass sich die Bearbeitungszone (36) in der Erstreckungszone (40) ausdehnt, dass die Bearbeitungszone (36) einen Beginn aufweist, und dass die Spiegel (31, 32, 33, 34) der Einstrahleinrichtung (30) in der definierten Erstreckungsrichtung (40) in einem unterschiedlichen Abstand zum Beginn der Bearbeitungszone (36) versetzt zueinander angeordnet sind.

2. Bearbeitungseinrichtung nach Anspruch 1, **dadurch gekennzeichnet, dass** der Strahlweg der Laserstrahlen (50) zwischen dem Austrittspunkt (18) der Laserstrahlen (50) über jeden der Spiegel (31, 32, 33, 34) zum Fokus (35) der Laserstrahlen (50) jeweils gleich lang ist.

3. Bearbeitungsvorrichtung nach einem der Ansprüche 1 oder 2, **dadurch gekennzeichnet, dass** die Bearbeitungsvorrichtung (10) ein definiertes Arbeitsfeld (39), insbesondere ein elliptisches (39.1) oder rautenförmiges (39.2) oder rechteckiges (39.3) Arbeitsfeld aufweist, und/oder dass die Spiegel (31, 32, 33, 34) insbesondere außenliegend zur Bearbeitungszone (36) in der Bearbeitungsvorrichtung (10) angeordnet sind.

4. Bearbeitungsvorrichtung nach einem der Ansprüche 1 bis 3, **dadurch gekennzeichnet, dass** die wenigstens eine Erzeugungseinrichtung (11) ausgebildet ist, dass sie in der Lage ist, die Länge des Arbeitsbereichs in der Bearbeitungszone (36) einzustellen und/oder für eine Variation der Brennweite den Fokusabstand der Laserstrahlen (50) zwischen dem Austrittspunkt (18) und der Fokuszone (37) zu verstellen und/oder den Verlauf der erzeugten Laserstrahlen (50) in der X-Richtung und/oder der Y-Richtung und/oder der Z-Richtung zu verändern.

5. Bearbeitungsvorrichtung nach Anspruch 1, **dadurch gekennzeichnet, dass** die Einstrahleinrichtung (30) vier Spiegel (31, 32, 33, 34) zum Einstrahlen der erzeugten Laserstrahlen (50) aus vier unterschiedlichen Einstrahlrichtungen in die Bearbeitungszone (36) aufweist.

6. Bearbeitungsvorrichtung nach einem der Ansprüche 1 bis 5, **dadurch gekennzeichnet, dass** die Bearbeitungsvorrichtung (10) eine einzige Erzeugungseinrichtung (11) aufweist, und dass alle Spiegel (31, 32, 33, 34) der Einstrahleinrichtung (30) der Erzeugungseinrichtung (11) zugeordnet sind, oder dass die Bearbeitungsvorrichtung (10) zwei Erzeugungseinrichtungen (11) aufweist, und dass jeder Erzeugungseinrichtung (11) jeweils eine Teilanzahl der Spiegel (31, 32, 33, 34) zugeordnet ist.

7. Bearbeitungsvorrichtung nach einem der Ansprüche 1 bis 6, **dadurch gekennzeichnet, dass** die Bearbeitungsvorrichtung (10) für eine dynamische Bearbeitung des Werkstücks (100), insbesondere für eine Bearbeitung des Werkstücks (100) im Durchlauf oder für eine getaktete Bearbeitung ausgebildet ist.

8. Bearbeitungsvorrichtung nach einem der Ansprüche 1 bis 7, **dadurch gekennzeichnet, dass** die Bearbeitungsvorrichtung (10) einen Werkstückeintritt (21) zum Einführen des Werkstücks (100) in die Bearbeitungszone (36) und einen Werkstückaustritt (22) zum Herausführen des Werkstücks (100) aus der Bearbeitungszone (36) aufweist.

9. Bearbeitungsvorrichtung nach einem der Ansprüche 1 bis 8, **dadurch gekennzeichnet, dass** die Bearbeitungsvorrichtung (10) wenigstens eine Antriebseinrichtung zum Hindurchführen des Werkstücks (100) durch die Bearbeitungszone (36) hindurch aufweist.

10. Bearbeitungsvorrichtung nach einem der Ansprüche 1 bis 9, **dadurch gekennzeichnet, dass** die Bearbeitungsvorrichtung (10) eine Absaugvorrichtung aufweist, die bereitgestellt ist, um mittels der Laserstrahlen (50) vom zu bearbeitenden Werkstück (100) abgelöste Partikel abzusaugen, und/oder dass die Bearbeitungsvorrichtung (10) eine Schutzvorrichtung für die Spiegel (31, 32, 33, 34) aufweist, und dass die Schutzvorrichtung insbesondere als wenigstens ein vor dem Spiegel (31, 32, 33, 34) platziertes Schutzglas und/oder als Einrichtung zur Erzeugung von Druckluft ausgebildet ist.

11. Verfahren zum Bearbeiten eines Werkstücks mittels Laserstrahlung, wobei das zu bearbeitende Werkstück in einer Bearbeitungszone einer Bearbeitungsvorrichtung aufgenommen wird, **gekennzeichnet durch** folgende Schritte.
a) über wenigstens eine Erzeugungseinrichtung der Bearbeitungsvorrichtung werden Laserstrahlen erzeugt;
b) über wenigstens eine der wenigstens einen Erzeugungseinrichtung zugeordnete Einstrahleinrichtung, welche eine Anzahl von Spiegeln aufweist, wobei die Bearbeitungszone eine definierte Erstreckungsrichtung aufweist, wobei sich die Bearbeitungszone in der Erstreckungszone ausdehnt, wobei die Bearbeitungszone einen Beginn aufweist, und wobei die Spiegel der Einstrahleinrichtung in der definierten Erstreckungsrichtung in einem unterschiedlichen Abstand zum Beginn der Bearbeitungszone versetzt zueinander angeordnet sind, werden die erzeugten Laserstrahlen aus mehreren unterschiedlichen Einstrahlrichtungen wahlweise oder in einer vorgegebenen Bearbeitungsreihenfolge über die Spiegel in die Bearbeitungszone eingestrahlt und in einer Fokuszone, die mit der Bearbeitungszone korrespondiert, fokussiert, wobei die Spiegel im Strahlweg der Laserstrahlen zwischen dem Austrittspunkt der Laserstrahlen aus der wenigstens einen Erzeugungseinrichtung und dem Fokus der jeweiligen Laserstrahlen angeordnet sind

12. Verfahren nach Anspruch 11, **dadurch gekennzeichnet, dass** in jeder Einstrahlrichtung der Strahlweg der Laserstrahlen zwischen dem Austrittspunkt der Laserstrahlen über jeden der Spiegel zum Fokus der Laserstrahlen jeweils gleich lang eingestellt wird.

13. Verfahren nach Anspruch 11 oder 12, **dadurch gekennzeichnet, dass** das Werkstück dynamisch bearbeitet wird und dass das Werkstück in einer definierten Vorschubrichtung und/oder mit einer konstanten oder variablen Vorschubgeschwindigkeit durch die Bearbeitungszone hindurchgeführt wird.

14. Verfahren nach einem der Ansprüche 11 bis 13, **dadurch gekennzeichnet, dass** dieses unter Verwendung einer Bearbeitungsvorrichtung nach einem der Ansprüche 1 bis 10 durchgeführt wird.

## Claims

1. Device for processing (10) a workpiece (100) by means of laser beams, comprising at least one generating device (11) for generating laser beams (50), a processing zone (36) which is designed to receive the workpiece (100) to be processed, and an irradiation device (30) associated with the at least one generating device (11) for irradiating the generated laser beams (50) from a plurality of different irradiation directions into the processing zone (36), whereby the irradiation device (36) is provided, that the focus (35) of the laser beams (50) irradiated from the different irradiation directions lies in a focal zone (37), which corresponds to the processing zone (36), wherein the irradiation device (30) comprises a number of mirrors (31, 32, 33, 34) which are used for the elimination of the laser beams, which are provided for irradiating the laser beams (50) in the different irradiation directions, wherein the mirrors (31, 32, 33, 34) are arranged in the beam path of the laser beams (50) between an exit point (18) of the laser beams (50) out of the at least one generating device (11) and the focus (35) of the laser beams (50), wherein the at least one generating device (11) is provided to irradiate the generated Laser beams (50) optionally or in a predetermined processing sequence via the mirrors (31, 32, 33, 34) into the processing zone (36), **characterized in that** the processing zone (36) comprises a defined direction of extension (40), that the processing zone (36) extends in the direction of extension (40), that the processing zone (36) has a beginning, and that the mirrors (31, 32, 33, 34) of the irradiation device (30) are arranged in the defined direction of extension (40) offset to each other in a different distance to the beginning of the processing zone (36).

2. Device for processing according to claim 1, **characterized in that** the beam path of the laser beams (50) between the exit point (18) of the laser beams (50) via each mirror (31, 32, 33, 34) to the focus (35) of the laser beams (50) is in each case of equal length.

3. Device for processing according to claim 1 or 2, **characterized in that** the processing device (10) comprises a defined working field (39), in particular an elliptical (39.1) or rhombic (39.2) or rectangular (39.3) working field, and/or that in particular the mirrors (21, 32, 33, 34) are arranged on the outside of the processing zone (36) in the processing device (10).

4. Device for processing according to anyone of claims 1 to 3, **characterized in that** the at least one generating device (11) is provided in such a way, that it is capable to adjust the length of the working area in the processing zone (36) and/or, for a variation of the focal length, to adjust the focal distance of the laser beams (50) between the exit point (18) and the focal zone (37) and/or to vary the course of the generated laser beams (50) in the X-direction and/or Y-direction and/or Z-direction.

5. Device for processing according to claim 1, **characterized in that** the irradiation device (30) comprises four mirrors (31, 32, 33, 34) for irradiating the generated laser beams (50) from four different irradiation directions into the processing zone (36).

6. Device for processing according to anyone of claims 1 to 5, **characterized in that** the device for processing (10) comprises one single generating device (11) and that all mirrors (31, 32, 33, 34) are assigned to the irradiation device (30) of the generating device (11), or that the device for processing (10) comprises two generating devices (11), and that a partial number of the mirrors (31, 32, 33, 34) is assigned to each generating device (11) respectively.

7. Device for processing according to anyone of claims 1 to 6, **characterized in that** the processing device (10) is provided for a dynamic processing of the workpiece (100), in particular for a processing of the workpiece (100) in flow path or for a clockwise processing.

8. Device for processing according to anyone of claims 1 to 7, **characterized in that** the processing device (10) comprises a workpiece-inlet (21) for introducing the workpiece (100) into the processing zone (36), and a workpiece-outlet (22) for removing the workpiece from the processing zone (36).

9. Device for processing according to anyone of claims 1 to 8, **characterized in that** the processing device (10) comprises at least one drive unit for guiding the workpiece (100) through the processing zone (36).

10. Device for processing according to anyone of claims 1 to 9, **characterized in that** the processing device (10) comprises a suction device, which is provided to suck-off particles, which are detached from the workpiece (100) to be processed by means of the laser beams (50), and/or, that the processing device (10) comprises a protection device for the mirrors (31, 32, 33, 34), and that in particular the protection device is provided as at least one protective glass being located in front of the mirror (31, 32, 33, 34) and/or as a device for generating compressed air.

11. Method for processing a workpiece by means of laser beams, wherein the workpiece to be processed is received in a processing zone of a processing device, **characterized by** the following steps:
a) laser beams are generated by means of at least one generating device of the processing device;
b) by means of at least one irradiation device associated with the at least one generating device, which comprises a number of mirrors, wherein the processing zone comprises a defined direction of extension, wherein the processing zone extends in the direction of extension, wherein the processing zone has a beginning, and wherein the mirrors of the irradiation device are arranged in the defined direction of extension offset to each other in a different distance to the beginning of the processing zone, the generated laser beams are irradiated from a number of different irradiation directions, optionally or in a predetermined processing sequence, via the mirrors into the processing zone, and are focused in a focus zone, which corresponds to the processing zone, wherein the mirrors are arranged in the beam path of the laser beams between the exit point of the laser beams out of the at least one generating device and the focus of the respective laser beams.

12. Method according to claim 11, **characterised in that** in each irradiation direction the beam path of the laser beams between the exit point of the laser beams via each mirror to the focus of the laser beams (50) is adjusted in each case to have equal length.

13. Method according to claim 11 or 12, **characterised in that** the workpiece is processed dynamically and that the workpiece is passed through the processing zone in a defined feed direction and/or with a constant or variable feed speed

14. Method according to anyone of claims 11 to 13, **characterised in that** it is performed using a processing device according to anyone of claims 1 to 10.

## Revendications

1. Dispositif de traitement (10) pour le traitement d'une pièce (100) par rayonnement laser, présentant au moins un appareil de génération (11) pour générer des rayons laser (50), une zone de traitement (36) qui est conçue pour recevoir la pièce (100) à traiter, et un appareil de projection (30) associé à l'au moins un appareil de génération (11) pour projeter les rayons laser générés (50) dans la zone de traitement (36) à partir de plusieurs directions de projection différentes, dans lequel l'appareil de projection (30) est prévu de sorte que le foyer (35) des rayons laser (50) projetés à partir des différentes directions de projection se trouve dans une zone focale (37) qui correspond à la zone de traitement (36), dans lequel l'appareil de projection (30) présente une pluralité de miroirs (31, 32, 33, 34) qui sont prévus pour projeter les rayons laser (50) dans les différentes directions de projection, dans lequel les miroirs (31, 32, 33, 34) sont agencés dans le trajet des rayons laser (50) entre un point de sortie (18) des rayons laser (50) de le au moins un appareil de génération (11) et le foyer (35) des rayons laser (50), dans lequel le au moins un appareil de génération (11) est conçu pour projeter les rayons laser (50) générés dans la zone de traitement (36) au choix ou dans un ordre de traitement prédéfini via les miroirs (31, 32, 33, 34), **caractérisé en ce que** la zone de traitement (36) présente une direction d'extension (40) définie, **en ce que** la zone de traitement (36) s'étend dans la zone d'extension (40), **en ce que** la zone de traitement (36) présente un début, et **en ce que** les miroirs (31, 32, 33, 34) de l'appareil de projection (30) sont agencés de manière décalée les uns par rapport aux autres dans la direction d'extension (40) définie à une distance différente du début de la zone de traitement (36).

2. Appareil de traitement selon la revendication 1, **caractérisé en ce que** le trajet des rayons laser (50) entre le point de sortie (18) des rayons laser (50) via chacun des miroirs (31, 32, 33, 34) et le foyer (35) des rayons laser (50) est respectivement de la même longueur.

3. Dispositif de traitement selon l'une quelconque des revendications 1 ou 2, **caractérisé en ce que** le dispositif de traitement (10) présente un champ de travail défini (39), en particulier un champ de travail elliptique (39.1) ou en forme de losange (39.2) ou rectangulaire (39.3), et/ou **en ce que** les miroirs (31, 32, 33, 34) sont agencés dans le dispositif de traitement (10), en particulier à l'extérieur de la zone de traitement (36).

4. Dispositif de traitement selon l'une quelconque des revendications 1 à 3, **caractérisé en ce que** ledit au moins un appareil de génération (11) est conçu pour être en mesure de régler la longueur de la zone de travail dans la zone de traitement (36) et/ou, pour une variation de la distance focale, de régler la distance focale des rayons laser (50) entre le point de sortie (18) et la zone focale (37) et/ou de modifier le trajet des rayons laser (50) générés dans la direction X et/ou la direction Y et/ou la direction Z.

5. Dispositif de traitement selon la revendication 1, **caractérisé en ce que** l'appareil de projection (30) présente quatre miroirs (31, 32, 33, 34) pour projeter les rayons laser (50) générés à partir de quatre directions de projection différentes dans la zone de traitement (36).

6. Dispositif de traitement selon l'une quelconque des revendications 1 à 5, **caractérisé en ce que** le dispositif de traitement (10) présente un seul appareil de génération (11), et **en ce que** tous les miroirs (31, 32, 33, 34) de l'appareil de projection (30) sont associés à l'appareil de génération (11), ou **en ce que** le dispositif de traitement (10) présente deux appareils de génération (11), et **en ce qu'**un nombre partiel des miroirs (31, 32, 33, 34) est associé à chaque appareil de génération (11).

7. Dispositif de traitement selon l'une quelconque des revendications 1 à 6, **caractérisé en ce que** le dispositif de traitement (10) est conçu pour un traitement dynamique de la pièce (100), en particulier pour un traitement de la pièce (100) en continu ou pour un traitement cadencé.

8. Dispositif de traitement selon l'une quelconque des revendications 1 à 7, **caractérisé en ce que** le dispositif de traitement (10) présente une entrée de pièce (21) pour introduire la pièce (100) dans la zone de traitement (36) et une sortie de pièce (22) pour faire sortir la pièce (100) de la zone de traitement (36).

9. Dispositif de traitement selon l'une quelconque des revendications 1 à 8, **caractérisé en ce que** le dispositif de traitement (10) présente au moins un appareil d'entraînement pour le passage de la pièce (100) à travers la zone de traitement (36).

10. Dispositif de traitement selon l'une quelconque des revendications 1 à 9, **caractérisé en ce que** le dispositif de traitement (10) présente un dispositif d'aspiration qui est prévu pour aspirer des particules détachées de la pièce (100) à traiter au moyen des rayons laser (50), et/ou **en ce que** le dispositif de traitement (10) présente un dispositif de protection pour les miroirs (31, 32, 33, 34), et **en ce que** le dispositif de protection est réalisé en particulier sous la forme d'au moins un verre de protection placé devant le miroir (31, 32, 33, 34) et/ou sous la forme d'un appareil pour produire de l'air comprimé.

11. Procédé de traitement d'une pièce par rayonnement laser, dans lequel la pièce à traiter est reçue dans une zone de traitement d'un dispositif de traitement, **caractérisé par** les étapes suivantes.
a) des rayons laser sont générés par l'intermédiaire d'au moins un appareil de génération du dispositif de traitement ;
b) via au moins un appareil de rayonnement associé à l'au moins un appareil de génération, appareil de rayonnement qui présente un certain nombre de miroirs, dans lequel la zone de traitement présente une direction d'extension définie, dans lequel la zone de traitement s'étend dans la zone d'extension, dans lequel la zone de traitement présente un début, et dans lequel les miroirs de l'appareil de rayonnement sont agencés de manière décalée les uns par rapport aux autres dans la direction d'extension définie à une distance différente du début de la zone de traitement, les rayons laser générés sont émis dans la zone de traitement à partir de plusieurs directions de rayonnement différentes au choix ou dans un ordre de traitement prédéfini via les miroirs et sont focalisés dans une zone focale qui correspond à la zone de traitement, dans lequel les miroirs sont agencés dans le trajet des rayons laser entre le point de sortie des rayons laser de l'au moins un appareil de génération et le foyer des rayons laser respectifs.

12. Procédé selon la revendication 11, **caractérisé en ce que**, dans chaque direction de rayonnement, le trajet des rayons laser entre le point de sortie des rayons laser via chacun des miroirs et le foyer des rayons laser est défini respectivement de même longueur.

13. Procédé selon la revendication 11 ou 12, **caractérisé en ce que** la pièce est traitée de manière dynamique et **en ce que** la pièce est guidée à travers la zone de traitement dans une direction d'avance définie et/ou à une vitesse d'avance constante ou variable.

14. Procédé selon l'une quelconque des revendications 11 à 13, **caractérisé en ce que** celui-ci est mis en oeuvre en utilisant un dispositif de traitement selon l'une quelconque des revendications 1 à 10.
